# EUROPEAN PATENT APPLICATION

(11) **EP 3 940 536 A1**
(43) Date of publication of application: **19.01.2022**
(21) Application number: 21170628.8
(22) Date of filing: 27.04.2021
(51) Int. Cl.: G06F 9/48, G06F 9/50, G06F 9/54

(54) **EVENT STREAM PROCESSING METHOD AND EVENT STREAM PROCESSING PROGRAM**

(30) Priority: 17.07.2020 JP 2020122797
(71) Applicant: FUJITSU LIMITED, Kanagawa 211-8588 (JP)
(72) Inventor: Nishiguchi, Naoki, Kanagawa, 211-8588 (JP); Yamaoka, Hisatoshi, Kanagawa, 211-8588 (JP); Takahashi, Eiichi, Kanagawa, 211-8588 (JP); Okabayashi, Miwa, Kanagawa, 211-8588 (JP); Matsumoto, Tatsuro, Kanagawa, 211-8588 (JP)
(74) Representative: Hoffmann Eitle

(57) **Abstract**

An event stream processing system includes processing threads including a distribution control thread in a first stage for transmitting a processing message, first and second event processing thread in a second stage to execute processing of the processing message, and a standard thread able to be a copy of the event processing thread. A method of event stream processing includes transmitting, by the distribution control thread, when the first or second event processing thread is in a heavy load state, a copy request message converting the standard thread to the copy to a heavy-load event processing thread, transmitting, by the heavy-load event processing thread, parameters to the standard thread in response to the copy request message, and executing, by a copy standard thread that has being converted to the copy, processing corresponding to the processing message by using the received parameters.

## Description

### FIELD

The present invention relates to an event stream processing method and an event stream processing program.

### BACKGROUND

An event stream processing system has a plurality of computer nodes (hereinafter, simply referred to as nodes), receives a great number of events generated in real-world IoT devices such as vehicles and smartphones, and performs event data processing (event processing) in a streaming manner. The event processing is, for instance, a processing operation of executing a program associated with each event.

In the event stream processing system, in order to stream-process the data of a great amount of events in real time, "objects" corresponding to IoT devices, in which events occur, are allocated to event processing threads of a plurality of nodes and registered therein in advance according to predetermined rules. The objects are associated with program called a plug-in that is executed when event data arrives from a device (an IoT device) where the event occurs, and play a role of defining the content of stream processing on various event data arriving from the IoT device.

The event stream processing system distributes event messages arriving from IoT devices to event processing threads in which the corresponding objects are registered and has the event processing threads execute a plug-in associated with the event included in the event message. In this way, the event stream processing system receives the stream of a great number of events transmitted from a plurality of IoT devices and stream-processes the plug-in corresponding to the event in real time.

The background technology of event stream processing is disclosed in Japanese Patent Application Publication No. 2019-133579, Japanese Translation of PCT Application No. 2017-514216, Japanese Translation of PCT Application No. 2016-536690, and Japanese Patent Application Publication No. 2015-28679.

### SUMMARY

The event stream processing system includes a plurality of event processing threads for each of a plurality of stages, and a plurality of event processing threads in an input stage process a received event message and transmit another event message to the event processing thread in a subsequent stage. The event processing thread in the subsequent stage processes the received event message, and further transmits another event message to the event processing thread in a further subsequent stage.

In the event stream processing system above, event processing may be concentrated on a specific event processing thread among a plurality of event processing threads provided in a certain stage, thereby increasing a load thereof, and the throughput of the entire system may decrease. If a great number of the specific event processing threads are deployed in anticipation of the concentration of event processing, the concentration of event processing is able to be alleviated.

However, the specific event processing thread where event processing is concentrated may change over time or may change differently depending on season. Therefore, it is difficult to alleviate the concentration of event processing in response to the change of the event processing thread in which the concentration of event processing occurs.

Therefore, an object of a first aspect of the present embodiment is to provide an event stream processing method and an event stream processing program that are able to alleviate, with a low amount of resources, the concentration and heavy load of event processing.

A first aspect of the embodiment is a method of event stream processing for an event stream processing system, the method comprising: wherein the event stream processing system including processing threads provided in each of a plurality of stages, the processing threads including a distribution control thread provided in a first stage, a first event processing thread and a second event processing thread provided in a second stage to execute, in response to a processing message, processing corresponding to the processing message, and a standard thread that is able to be a copy of either the first event processing thread or the second event processing thread, transmitting, by the distribution control thread, the processing message to either the first event processing thread or the second event processing thread, transmitting, by the distribution control thread, when an event processing thread of either the first event processing thread or the second event processing thread is in a heavy load state, a copy request message that requests converting the standard thread to the copy to a heavy-load event processing thread and registers the standard thread in a distribution destination list, transmitting, by the heavy-load event processing thread, parameters for operating as a copy of the heavy-load event processing thread to the standard thread in response to reception of the copy request message, and executing, by a copy standard thread that has received the parameters and being converted to the copy, processing corresponding to the processing message received from the distribution control thread by using the received parameters.

### BRIEF DESCRIPTION OF DRAWINGS

FIG. 1 is a diagram illustrating an outline of an event stream processing system.
FIG. 2 is a diagram illustrating a logical configuration and a physical configuration of the processing of the event stream processing system.
FIG. 3 is a diagram illustrating a configuration example of the event processing thread ev_prc.
FIG. 4 is a flowchart illustrating the processing of the event processing thread.
FIG. 5 is a diagram illustrating an example of an object state table, parameters, and a plug-in table stored in the memory memo of the event processing thread.
FIG. 6 is a diagram illustrating a simple configuration example of the event stream processing system.
FIG. 7 is a diagram illustrating a configuration example of another event stream processing system.
FIG. 8 is a diagram illustrating a configuration example of the event stream processing system according to the present embodiment.
FIG. 9 is a diagram illustrating a first operation example of distribution control in an event stream processing system.
FIG. 10 is a diagram illustrating a second operation example of distribution control in an event stream processing system.
FIG. 11 is a diagram illustrating a flowchart of processing of the processing distribution setting program.
FIGS. 12 and 13 are diagrams illustrating detailed flowcharts of steps S20 to S23 of FIG. 11.
FIG. 14 is a diagram illustrating an example of a standard thread ID list and a distribution destination list.
FIG. 15 is a diagram illustrating plug-ins and parameters set by the processing distribution setting program.
FIG. 16 is a diagram illustrating an example of distribution control processing and copy control processing.
FIG. 17 is a diagram illustrating a distribution control management table and a distribution destination list in the distribution control thread p21 before and after the distribution control processing.
FIG. 18 is a diagram illustrating a configuration example of the distribution control thread.
FIG. 19 is a diagram illustrating a flowchart of the distribution control processing c_prc1 by the distribution control thread.
FIG. 20 is a diagram illustrating a configuration example of an event processing thread and a standard thread.
FIG. 21 is a diagram illustrating an example of copy release, which is one of the distribution control processing.
FIG. 22 is a diagram illustrating a first specific example of the distribution control processing.
FIG. 23 is a diagram illustrating a second specific example of the distribution control processing.
FIG. 24 is a diagram illustrating a third specific example of the distribution control processing.
FIG. 25 is a diagram illustrating a first specific example of the distribution destination transmission processing.
FIG. 26 is a diagram illustrating a second specific example of the distribution destination transmission processing.
FIG. 27 is a table illustrating a state example of the object state table.

### DESCRIPTION OF EMBODIMENTS

### Outline of Event Stream Processing System

An event stream processing system is an event stream processing system in which a plurality of computer nodes process events transmitted from IoT devices of a plurality of event generating devices (for instance, connected cars) in the real world that generate events. Event data is, for instance, the value (state value) of an internal state such as the speed, the position, and the like of the connected car. Event data is collected in an event stream processing system in a data center. Then, each time an event message (event data) arrives, the event stream processing system executes pre-registered processing (plug-in) and provides a service on the basis of the processing. The event stream processing system executes processing in an event-driven manner at the timing when the value of the state of the object changes.

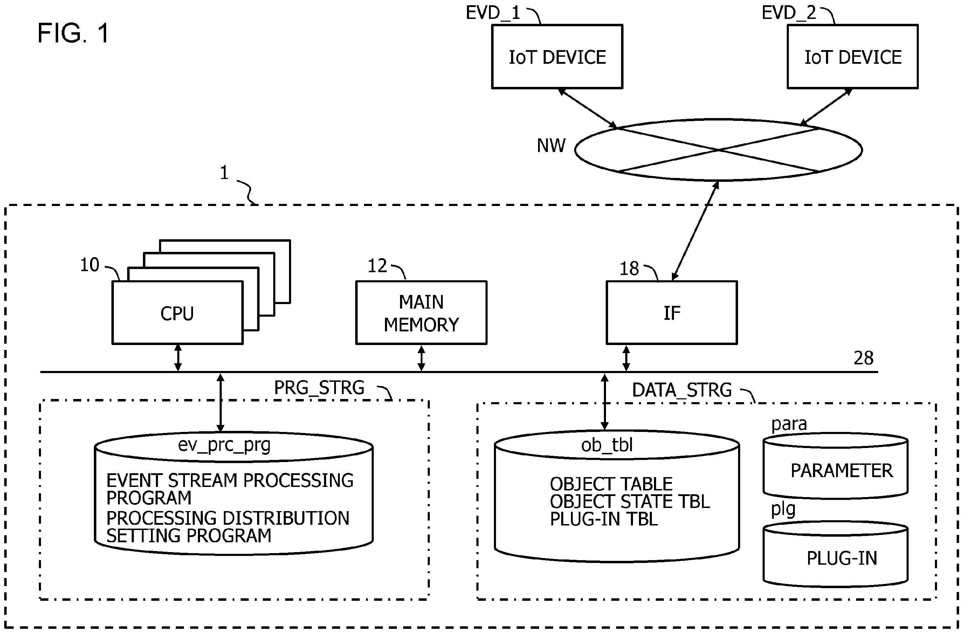

FIG. 1 is a diagram illustrating an outline of an event stream processing system. An event stream processing system 1 is a computer system such as a personal computer or a server. The event stream processing system 1 includes processors 10 which are a plurality of central processing units (CPUs), a main memory 12 which is able to be accessed by the processors, an interface IF between an external network NW and peripheral devices (not illustrated), and a bus 28 connecting these components.

The event stream processing system 1 is accessed from event generating devices EVD_1 and EVD_2, which are the event generating sources, via the network NW. Further, the event stream processing system 1 has a program storage PRG_STRG in which various programs are stored and a data storage DATA_STRG in which various pieces of data are stored. A plurality of computer systems 1 or a plurality of processors 10 correspond to computer nodes.

The program storage PRG_STRG stores an event stream processing program ev_prc_prg including a processing distribution setting program. In addition, the data storage DATA_STRG stores an object table ob_tbl, plug-ins plg, parameters para, and the like. The object table ob_tbl includes, for instance, an object state table, a plug-in table, and the like. The parameters are referred to when a plug-in is executed. These programs and tables will be described in detail later.

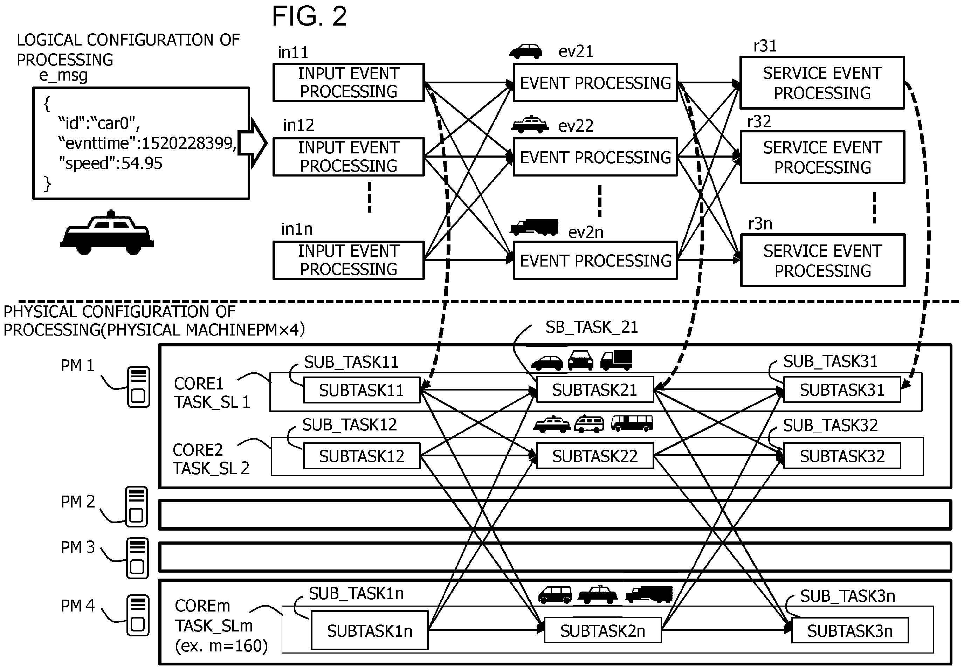

FIG. 2 is a diagram illustrating a logical configuration and a physical configuration of the processing of the event stream processing system. In the logical configuration of processing, a pipeline configuration of each multi-stage processing stage is provided in each of nodes PM1 to PM4. Event messages e_msg transmitted from a plurality of IoT devices of an event generating source are distributed to predetermined processing stages, and each processing stage executes, in response to the update of the state of the object included in the event message, the plug-in corresponding to the state.

As illustrated in the logical configuration of processing in FIG. 2, the processing stage of each node has, for instance, input event processing threads in11 to in1n, event processing threads ev21 to ev2n, and service event processing threads r31 to r3n. The incoming event message e_msg is transmitted to the input event processing thread of an arbitrary node. A transmission-destination input event processing thread performs verification or the like of the event message and transmits the information included in the event message, an object identifier, a state name, and its state value to the allocated event processing threads ev21 to ev2n based on the object identifier and the stage number included in the event message. The data (a state name and a plug-in ID) of the object to be handled is registered in the event processing threads ev21 to ev2n. When the state value is updated in the received event data, the event processing thread executes a predetermined plug-in for the updated state value.

The object of each event processing thread corresponds to a car or the like in the real world and is also correlated with a service or the like. That is, the object is correlated with a specific thing (a person or a car) that is an event generating source or is correlated with a service provided by aggregating and processing the event data. The event is an update of the state of the object.

Here, a thread is a program that performs certain processing, and is generally an activated program. However, threads also include programs written in a binary in a storage so as to be activatable.

The event processing threads ev21 to ev2n execute plug-ins with respect to an update of the state (for instance, the internal state of a car) of a real-world object (for instance, a car) and transmit an event message including an update of the state (movement of a car) of a service object (for instance, car congestion in a region) to the service event processing threads r31 to r3n in the subsequent stage. The service event processing threads execute plug-ins corresponding to the state of the service object.

As illustrated in the physical configuration of processing in FIG. 2, the plurality of physical machines PM of the event stream processing system generate a plurality of subtasks SUB_TASK in task slots TASK_SL generated by a plurality of processor cores CORE. The plurality of subtasks correspond to the input event processing thread, the event processing thread, and the service event processing thread of the logical configuration, respectively. For instance, a subtask SUB_TASK21 processes the events of a plurality of objects (for instance, cars) registered in the event processing thread ev21 of the logical configuration.

For instance, when four physical machines PM1 to PM4 each have forty processor cores CORE, 160 processor cores CORE1 to COREm generate task slots TASK_SL1 to TASK_SLm (m = 160). Then, the plurality of input event processing threads, event processing threads, and service event processing threads configured in the pipeline are correlated with stage numbers in the pipeline direction (right direction in the drawing), respectively.

The event message e_msg has an object identifier (id), a message type, a stage number, a state name, a state value, and the like, as will be described later. The input event processing threads in11 to in1n calculate a hash value of an object identifier of the event message, and transmits the event message to the event processing threads ev21 to ev2n of a subtask SUB_TASK identified by a stage number, in a task slot TASK_SL identified by the hash value.

The input event processing thread, the event processing thread, and the service event processing thread illustrated in the logical configuration of processing in FIG. 2 are all event processing threads that execute event processing in response to reception of an event message. When the processor core CORE of each of the plurality of processors 10 illustrated in FIG. 1 executes the event stream processing program ev_prc_prg, various functions of the event processing thread illustrated in the logical configuration of processing are realized.

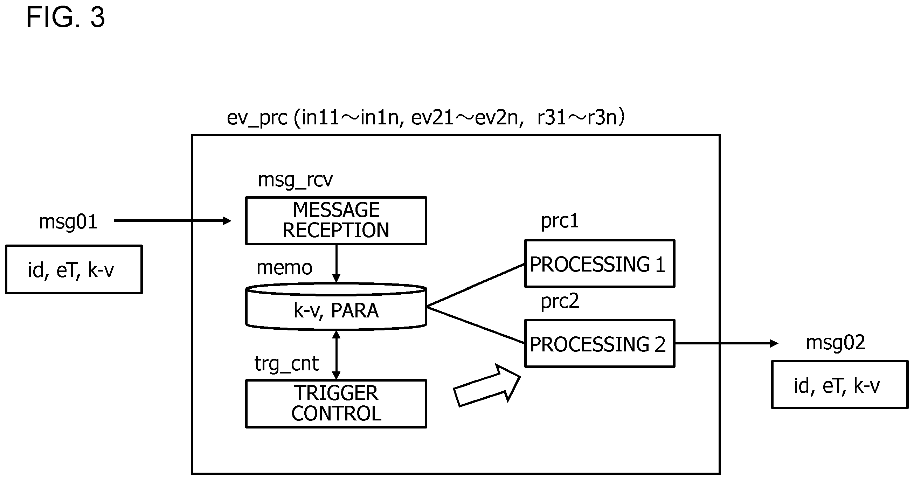

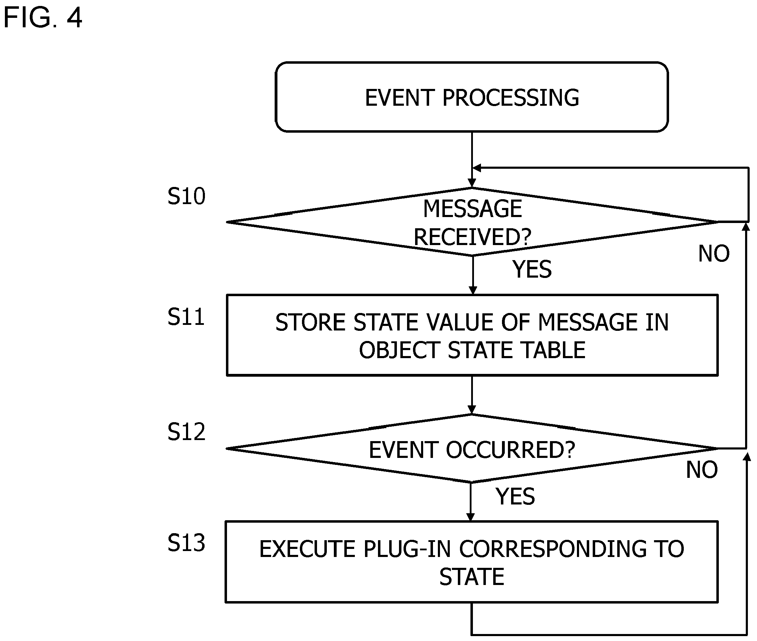

FIG. 3 is a diagram illustrating a configuration example of the event processing thread ev_prc. The input event processing thread and the service event processing thread in FIG. 2 are all a type of this event processing thread ev_prc. FIG. 4 is a flowchart illustrating the processing of the event processing thread. The processor 10 executes an event processing program to realize the function of the event processing thread of FIG. 3, and executes the event processing by the event processing thread of FIG. 4. In the following description, the description of the processor executing the event processing program to execute various processing operations will be omitted.

In the event processing thread ev_prc, a message receiver msg_rcv responds to the reception of a key-value format message msg (S10) and stores the data in the message (S11). The message msg has, for instance, an object identifier (id) of a destination, an event time eT which is an event occurrence time, and state data k-v of which the state and the value is key and value. The event processing thread ev_prc stores the state data k-v and the parameter para of the plug-in described later in a memory memo. The state name (state) and the value (value) of the state data k-v are stored in the object state table in the object table ob_tbl described above.

In the event processing thread, a trigger control unit trg_cnt further responds to the update or new writing of the state value in the object state table in the memory memo (S12), and causes the processor 10 to execute the processing operations prc1 and prc2 corresponding to the state (S13). The processing operations prc1 and prc2 are plug-ins that are executed when the state value is changed or newly written. In the example of FIG. 3, the processing prc2 is executed in response to the change of the state value by a message msg01, and a new message msg02 is transmitted to the event processing thread in the subsequent stage. The processing operations prc1 and prc2 also include event processing for processing an event of changing the state value and control processing for performing distribution control processing described later. The control process is also executed triggered by the change of the corresponding state value.

The messages msg include, for instance, an event message having a sensor value of a real-world car as a state value and a control message having a control processing content as a state value. Correspondingly, the plug-ins include an event processing plug-in that is executed in response to a change of the state value of an event message and a control processing plug-in that is executed in response to a change of the state value of a control message.

The object identifier (id) in the message is an identifier that uniquely indicates the object that is the processing content of an event processing thread. This object identifier (id) is allocated to each event processing thread.

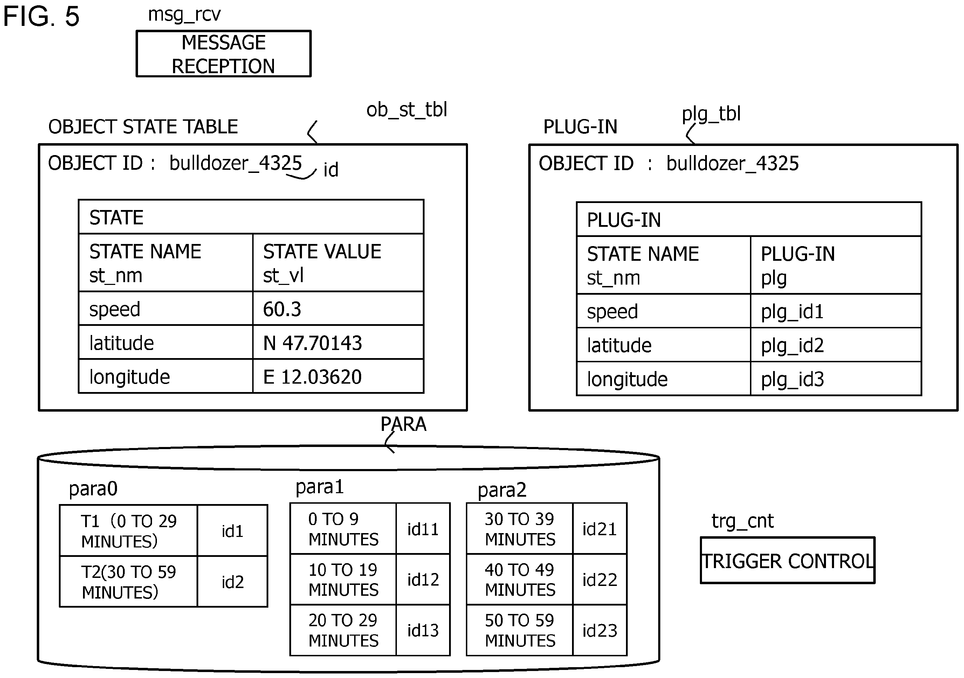

FIG. 5 is a diagram illustrating an example of an object state table, parameters, and a plug-in table stored in the memory memo of the event processing thread. The object state table ob_st_tbl is a table having an object identifier id, for instance, "bulldozer_4325" (corresponding to an IoT device of a real-world bulldozer), and stores a state name st_nm and its state value st_vl. In the example illustrated in FIG. 5, the state name st_nm is "speed", "latitude", and "longitude", and an example of the state value st_vl is illustrated.

On the other hand, the plug-in table plg_tbl is a table in which plug-in identifiers plg_id1 to plg_id3 corresponding to the state names are stored. For instance, the data storage DATA_STRG illustrated in FIG. 1 stores a program code of an executable plug-in corresponding to the plug-in identifiers plg_id1 to plg_id3. Upon detecting a change or the like of the state value in the object state table, the trigger control unit trg_cnt refers to the plug-in table and causes the processor to execute the plug-in code of the plug-in identifier corresponding to the state of the changed state value.

The parameter para is, for instance, parameter data that is referred to when the plug-in is executed. An example of the parameter is the object identifier of the event processing thread in the subsequent stage to which a message is transmitted according to the event time.

In the example illustrated in FIG. 5, the parameter para0 has object identifiers id1 and id2 corresponding to the timeframes T1 and T2, respectively. The parameter para1 has object identifiers id11, d12, and id13 corresponding to three timeframes of 0 to 9 minutes, 10 to 19 minutes, and 20 to 29 minutes, respectively. The parameter para2 has object identifiers id21, d22, and id23 corresponding to another three timeframes 30 to 39 minutes, 40 to 49 minutes, and 50 to 59 minutes, respectively.

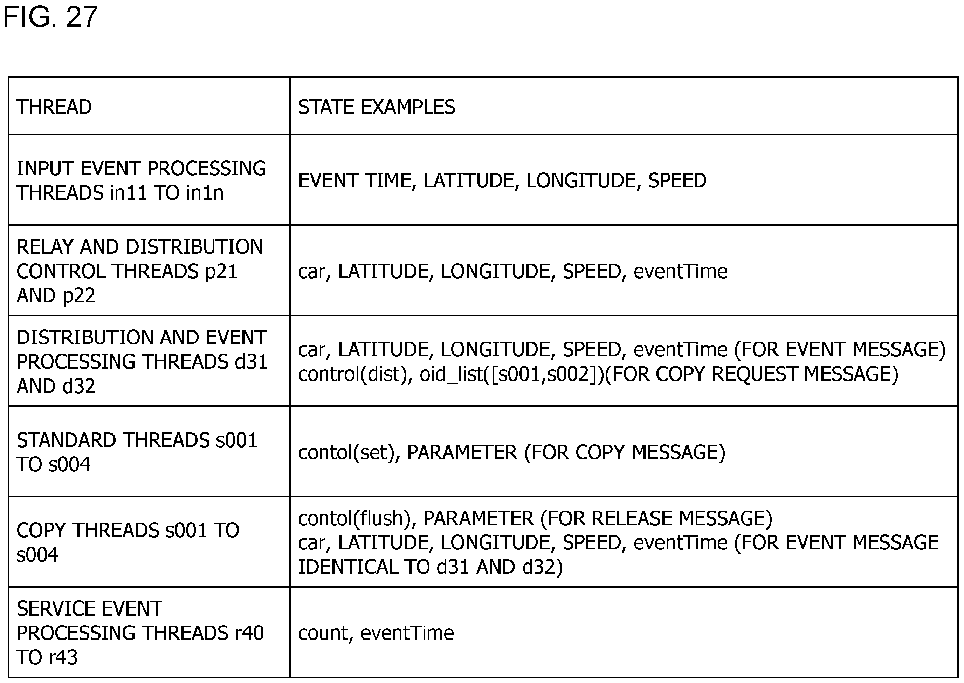

FIG. 27 is a table illustrating a state example of the object state table. FIG. 27 illustrates state examples of an object state table provided in input event processing threads in11 to in1n, relay and distribution control threads p21 and p22, distribution and event processing threads d31 and d32, standard threads s001 to s004, copy threads s001 to s004, and service event processing threads r40 to r43 which will be described later.

The object state tables of the input event processing threads in11 to in1n contain values of the states illustrated in FIG. 27, and the received event message contains these state values. The same applies to the object state tables of the distribution control threads p21 and p22 that also relay event messages, the event processing threads d31 and d32 that also distributes event messages to the subsequent stages, the standard threads s001 to s004, the copy threads s001 to s004, and the service event processing threads r40 to r43.

### Specific Example of Event Stream Processing System

In order to understand the outline of the event stream processing system, the event stream processing will be described on the basis of a specific example. In the following, the event stream processing will be described by way of a specific example of stream processing that executes a service that calculates the average speed of a plurality of cars present in the real world in respective timeframes T1 and T2 (T1: 0 to 29 minutes, T2: 30 to 59 minutes).

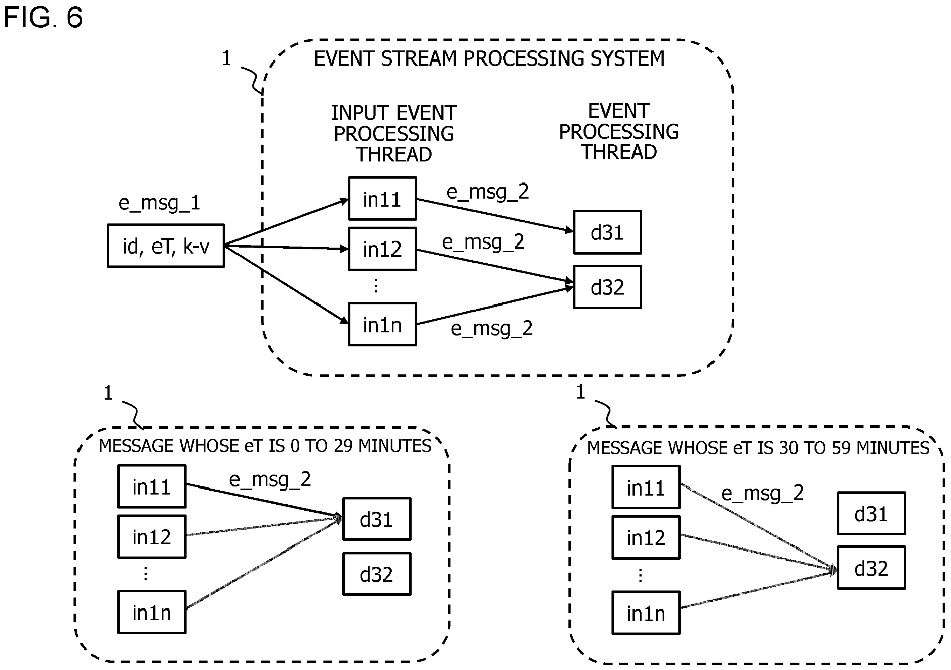

FIG. 6 is a diagram illustrating a simple configuration example of the event stream processing system. The configuration of the event stream processing system 1 includes a plurality of input event processing threads in11 to in1n and event processing threads d31 and d32.

In the above specific example, an event message e_msg_1 is transmitted from a plurality of cars present in the real world, and is received by any one of the input event processing threads in11 to in1n. The event message e_msg_1 includes an object identifier (id) of a destination input event processing thread, a current time (event time) eT, a state value (example: speed) k-v, and the like. Input control processing (not illustrated) delivers an event message to the input event processing thread of the object identifier on the basis of the object identifier (id) of the event message e_msg_1.

The input event processing threads in11 to in1n calculate whether the current timeframe is the timeframe T1 or T2 from the event time eT of the received event message and transmits an event message e_msg_2 to the event processing threads d31 and d32 that execute the processing corresponding to the timeframe T1 or T2. That is, the input event processing thread executes a plug-in that calculates whether the event time eT is the timeframe T1 or T2 in response to the update of the state value (example: speed) included in the received event message. This plug-in executes the above-described calculation by referring to the parameter (para0 in FIG. 5) having, for instance, the timeframes T1 and T2 and the object identifiers of the event processing threads d31 and d32 in the subsequent stage corresponding to the timeframes T1 and T2, respectively.

Then, for instance, this plug-in transmits an event message e_msg_2 having the object identifier (id) corresponding to the timeframe T1 or T2 acquired by calculation and a state value (example: speed) to the thread corresponding to the timeframes T1 and T2 among the event processing threads d31 and d32 in the subsequent stage.

The event processing threads d31 and d32 receive a plurality of event messages e_msg_2 addressed thereto and calculate, for instance, the average speeds in the timeframes T1 and T2, respectively. In other words, the plug-in executed by the event processing threads d31 and d32 is a program that calculates the average of the state values (speeds) in the plurality of event messages in each of the timeframes T1 and T2.

In the above specific example, when the event time eT is the timeframe T1 of 0 to 29 minutes, a plurality of event messages e_msg_2 transmitted by the plurality of input event processing threads in11 to in1n is concentrated on the event processing thread d31 that calculates the average speed in the timeframe T1. On the other hand, when the time elapses and the event time eT transitions to the timeframe T2 of 30 to 59 minutes, a plurality of event messages e_msg_2 is concentrated on the event processing thread d32 that calculates the average speed of the timeframe T2.

The input event processing threads in11 to in1n are correlated with real-world cars, and receive the event messages e_msg_1 transmitted from the corresponding cars. Therefore, not all of the plurality of input event processing threads always transmit the event message, but a plurality of some input event processing threads receive the event message e_msg_1 and execute the processing of selecting the destination of the event message e_msg_2.

In an actual event stream processing system, the number of input event processing threads in11 to in1n is, for instance, 10,000, and the number of event processing threads d31 and d32 is, for instance, 1,000. In such a case, it is inefficient that all ten thousand input event processing threads have resources (plug-ins and parameters) for selecting the destination of the event message e_msg_2.

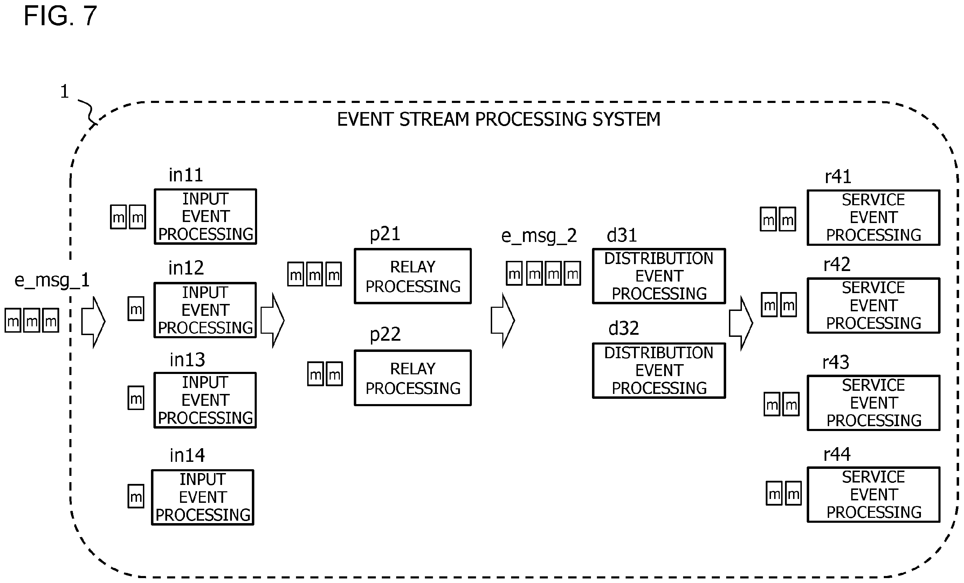

FIG. 7 is a diagram illustrating a configuration example of another event stream processing system. In FIG. 7, the event message e_msg that arrives at each processing thread is simply illustrated by a block having the character m. Unlike FIG. 6, the event stream processing system 1 of FIG. 7 has relay processing threads p21 and p22 that perform relay processing between the input event processing threads in11 to in14 and the event processing threads d31 and d32. Further, a plurality of service event processing threads r41 to r44 are provided in the subsequent stage of the event processing threads d31 and d32. Each of the service event processing threads r41 to r44 executes service event processing of aggregating the number of cars in different timeframes on the basis of the number of event messages transmitted from the event processing threads d31 and d32, for instance. The event processing threads d31 and d32 refer to the respective parameters (for instance, the parameters para1 and para2 in FIG. 5) to select a destination service event processing thread r41-r44 of the event message.

For instance, one hundred relay processing threads p21 and p22 are provided, which are lower than ten thousand input event processing threads in11-in14. The destination of the event message e_msg_2 is selected by the relay processing threads p21 and p22 in FIG. 7, not by the input event processing threads in11 to in1n as FIG. 6. Therefore, the input event processing thread only needs to transmit the event message to the relay processing thread selected in advance on the basis of the hash value calculated from the object identifier (id), and does not need to select the destination among the event processing threads d31-d32. As a result, it is possible to eliminate the burden of the input event processing thread for selecting the destination of the message. Further, even when some input event processing threads receive the event message, the plurality of relay processing threads p21-p22 evenly share the load of the event message destination selection processing.

In the case of FIG. 7, as described with reference to FIG. 6, in the timeframe T1, the event message e_msg_2 having the speed of the timeframe T1 is concentrated on the event processing thread d31, and the processing load of the event processing thread d32 is low during that time. To the contrary, in the timeframe T2, the event message e_msg_2 having the speed of the timeframe T2 is concentrated on the event processing thread d32. The event processing threads d31 and d32 transmit the event message to any one of the plurality of service event processing threads r41 to r44 in the subsequent stage. Therefore, if many event messages are concentrated on any one of the event processing threads d31 and d32, the efficiency of the entire event stream processing is lowered. In addition, since the event processing thread d31 or d32 in which event messages are concentrated change over time, providing a great number of event processing threads d31 and d32 for alleviation of concentration causes a decrease in resource efficiency.

### Event Stream Processing System of Present Embodiment

In the event stream processing system, since events are stream-processed, messages between event processing threads are one-way messages from a preceding stage to a subsequent stage. Moreover, messages are not transmitted between event processing threads in the same stage. Therefore, a plurality of event processing threads in the same stage do not perform control processing and event processing in a coordinated manner. The event stream processing system stream-processes events arriving from the real world under the above constraints.

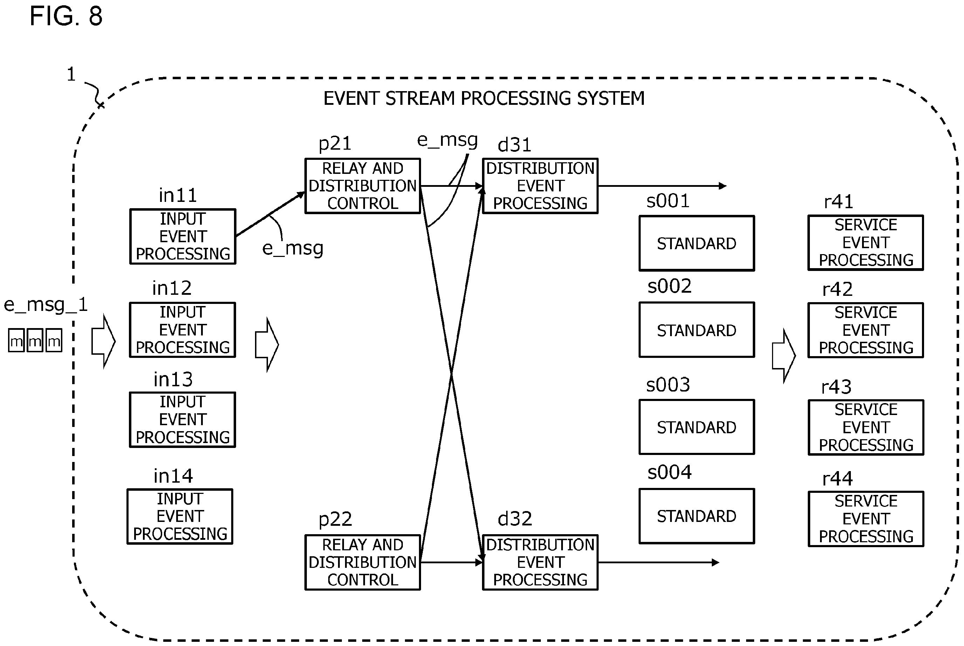

FIG. 8 is a diagram illustrating a configuration example of the event stream processing system according to the present embodiment. The event stream processing system 1 has input event processing threads in11 to in1n and service event processing threads r41 to r44 as in FIG. 7.

On the other hand, unlike FIG. 7, the relay processing threads p21 and p22 in FIG. 8 are relay and distribution control processing threads (hereinafter, referred to simply as distribution control threads) that perform distribution control processing. The distribution control processing is processing of distributing the concentration of processing in the event processing threads d31 and d32. Further, standard threads s001 to s004 that are able to be converted into the copy thread of any one of the event processing threads d31 and d32 or both copy threads are provided in the subsequent stage of the event processing threads d31 and d32. Then, the event processing threads d31 and d32 are distribution and event processing threads (hereinafter, referred to simply as event processing threads) that perform distribution processing of distributing their own event processing to the standard thread and converting the standard thread into the copy event processing thread.

In the present embodiment, as described above, when the processor 10 executes the event processing stream program ev_prc_prg including the processing distribution setting program, the processing of each thread in the event stream processing system of FIG. 8 is executed, and the function of each thread is realized.

The event processing plug-ins (or plug-in identifiers) of the event processing threads d31 and d32 are also preset in the standard threads s001 to s004. However, the parameters for event processing included in the event processing threads d31 and d32 are not set in the standard thread. This is because the event processing thread in which processing is concentrated changes, setting the parameters held by each event processing thread in advance in the standard thread causes a decrease in resource efficiency.

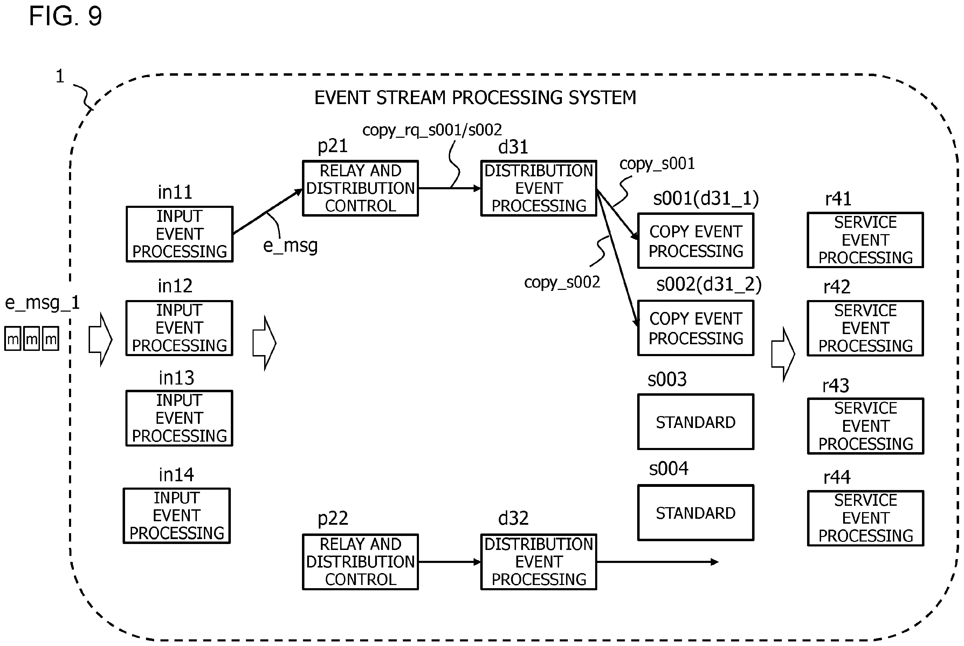

FIG. 9 is a diagram illustrating a first operation example of distribution control in an event stream processing system. The input event processing thread in11-in14 stores the state value of the event message in the object table in response to reception of the event message addressed thereto, and executes the event processing in response to the event such as the update of the state value. Then, another event message is transmitted to any one of the distribution control threads p21 and p22 in the subsequent stage. The destination of this event message is determined in advance on the basis of the hash value of the object identifier of the input event processing thread.

The distribution control threads p21 and p22 transmit an event message to either the event processing thread d31 that performs processing in the timeframe T1 or the event processing thread d32 that performs processing in the timeframe T2 based on the event time of the received event message. In addition, the distribution control threads p21 and p22 monitor or predict the degree of concentration of event messages in the event processing threads d31 and d32, and determine whether a copy of the event processing thread has to be generated in the standard thread.

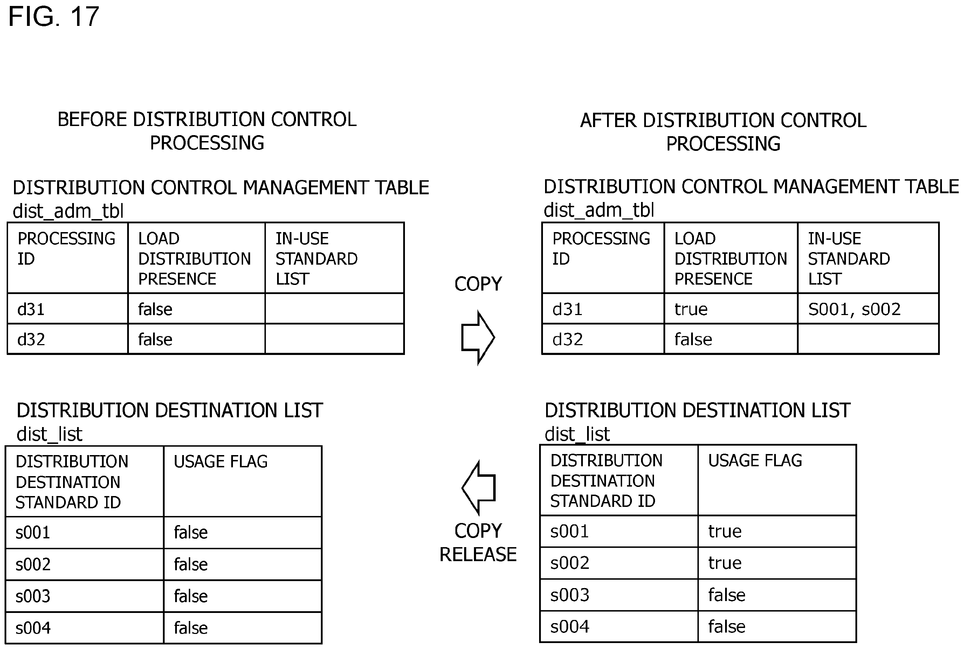

In the example of FIG. 9, the distribution control thread p21 detects or predicts the concentration in the event processing thread d31, and transmits a copy request message copy_rq_s001/s002 to the event processing thread d31. The copy request message copy_rq_s001/s002 is a message requesting that the standard threads s001 and s002 be converted into a copy of the event processing thread d31 of the message destination. Along with the transmission of the copy request message, the distribution control thread p21 records "in use" in the standard threads s001 and s002 in a distribution destination list of the event processing thread d31, and records "s001, s002" in an in-use standard list of the event processing thread d31 in a distribution control management table. Specifically, see FIG. 17.

In response to the reception of the copy request message copy_rq_s001/s002, the event processing thread d31 transmits the copy message copy_s001 to the standard thread s001 and the copy message copy_s002 to the standard thread s002. These copy messages contain the parameters included in the event processing thread d31. In response to the reception of the copy messages, the standard threads s001 and s002 set the parameters in the copy messages, respectively, and convert themselves into the copy of the event processing thread d31. That is, the standard threads s001 and s002 are converted into copied event processing threads (or copy event processing threads) d31_1 and d31_2, respectively.

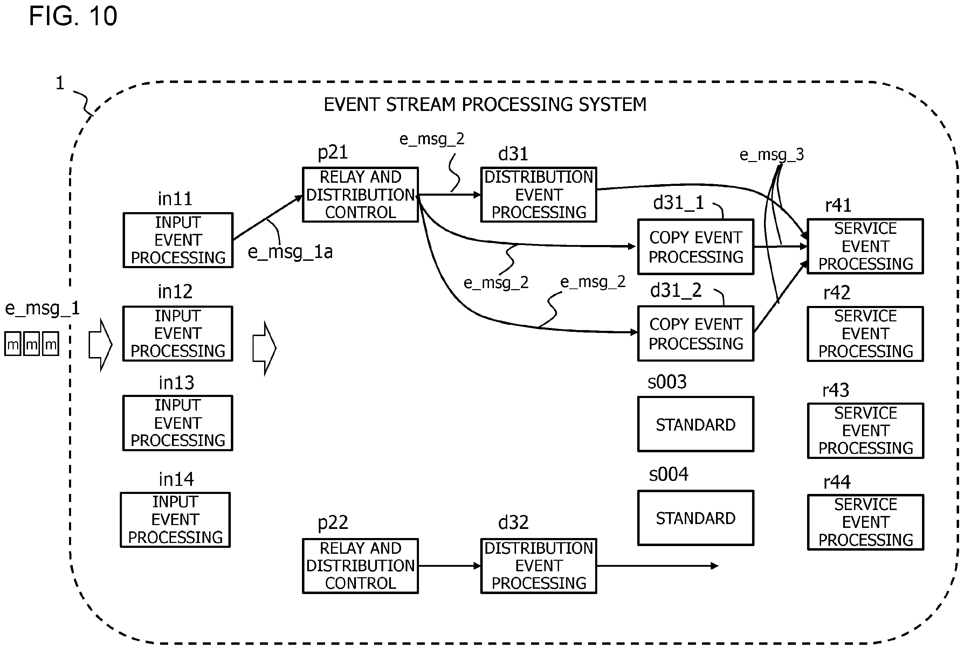

FIG. 10 is a diagram illustrating a second operation example of distribution control in an event stream processing system. FIG. 10 illustrates an operation example after the standard threads s001 and s002 are converted into the copies of the event processing thread d31 in FIG. 9.

As illustrated in FIG. 10, upon receiving the event message e_msg_1 from the real-world car, the input event processing thread in11 executes needed processing and transmits the event message e_msg_1a to the distribution control thread p21. The distribution control thread p21 distributes and transmits the event message e_msg_2 to any one of the event processing thread d31 and the copy event processing threads d31_1 and d31_2 based on the fact that the event time eT of the received event message is the timeframe T1. When the above-mentioned distribution control processing is executed, the distribution control thread p21 knows that the event message e_msg_2 has to be distributed and transmitted to three threads d31, s001 and s002 on the basis of s001 and s002 recorded in the in-use standard list of the event processing thread d31 in the distribution control management table. After that, the three threads d31, s001, and s002 execute event processing for the received event message e_msg_2, and transmit an event message e_msg_3 to the destination service event processing threads r41 to r44 in the subsequent stage.

In this way, the copy event processing threads s001 and s002 are added to the event processing thread d31 which is determined to be heavily loaded due to the concentration of a great amount of event messages e_msg_2, and the distribution control thread p21 distributes and transmits the event message e_msg_2 to the three threads d31, s001 and s002. As a result, the heavy load on the event processing thread d31 is able to be suppressed.

Although not illustrated in FIG. 10, when the concentration of the event message e_msg_2 in the event processing thread d31 is alleviated, the copy event processing threads s001 and s002 are no longer needed. Therefore, the distribution control thread p21 transmits a release message requesting the release of copy to the copy event processing threads s001 and s002, and causes them to delete (flush) the parameters, thereby returning the copy event processing threads to the standard threads. At the same time, the distribution control thread p21 restores the distribution destination list and the distribution control management table. As a result, the standard threads s001 and s002 are able to be used as the copy event processing threads of the distribution destination by another distribution control thread p22 or the like.

### Processing Distribution Setting

Next, the processing distribution setting by the processing distribution setting program will be described. The processing distribution setting program is a subroutine program of the event stream processing program or an independent program. As a premise, as illustrated in FIG. 8, a predetermined number of standard threads are generated in advance in the event stream processing system in the subsequent stage of the event processing threads d31 and d32 where it is detected or predicted that processing distribution is needed. Then, the processor executes the processing distribution setting program, and performs the needed settings in the event processing threads d31 and d32 and the standard threads s001 to s004 so that the distribution control of FIGS. 9 and 10 becomes possible.

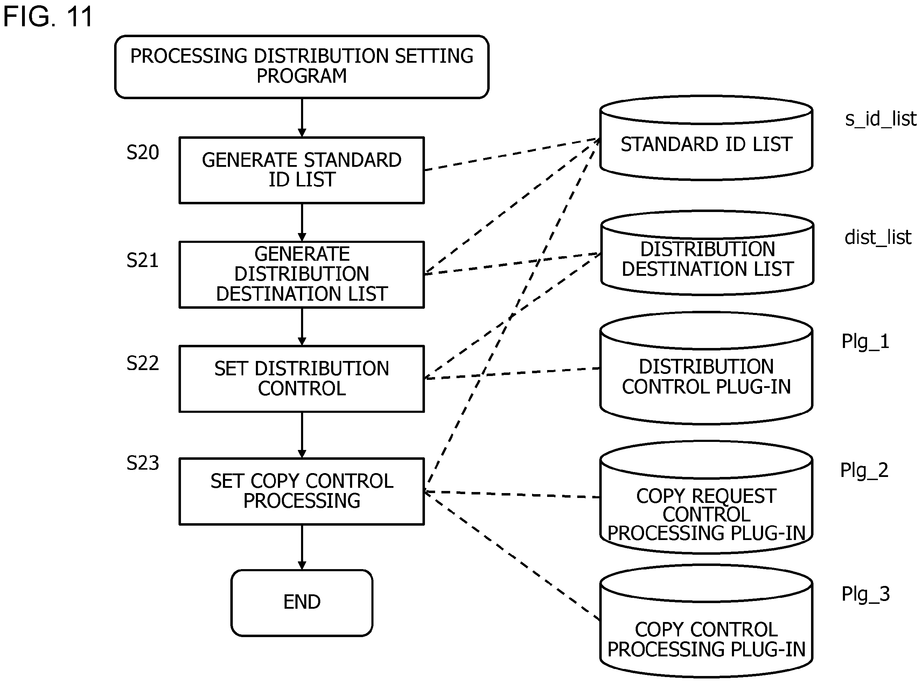

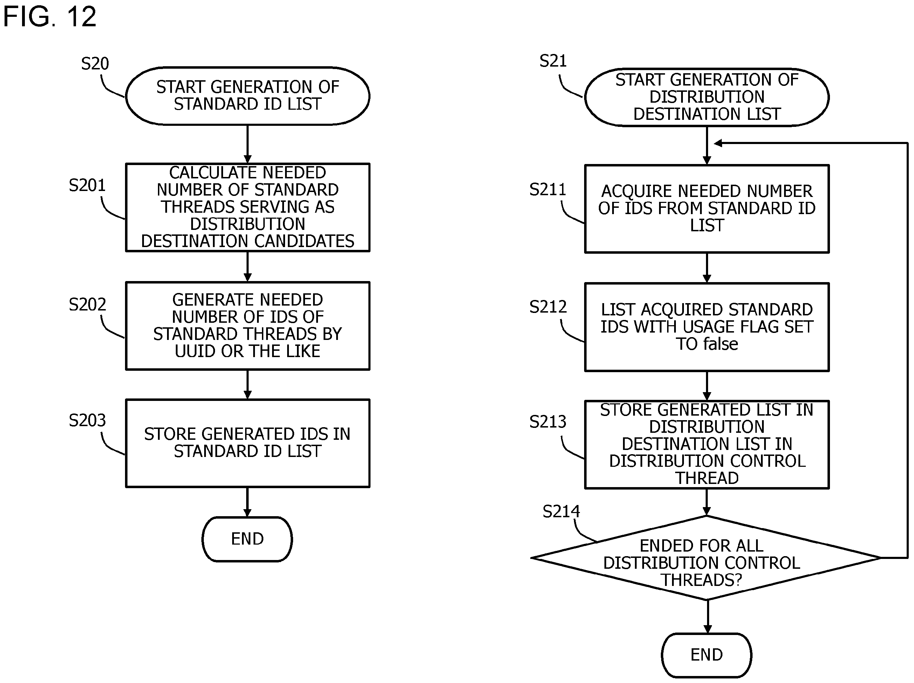

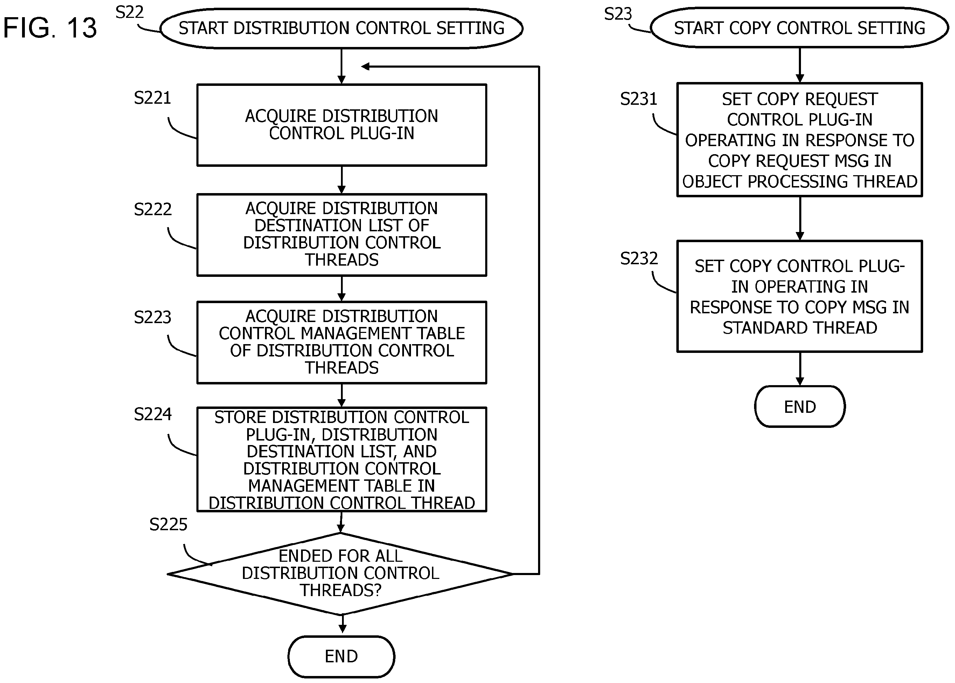

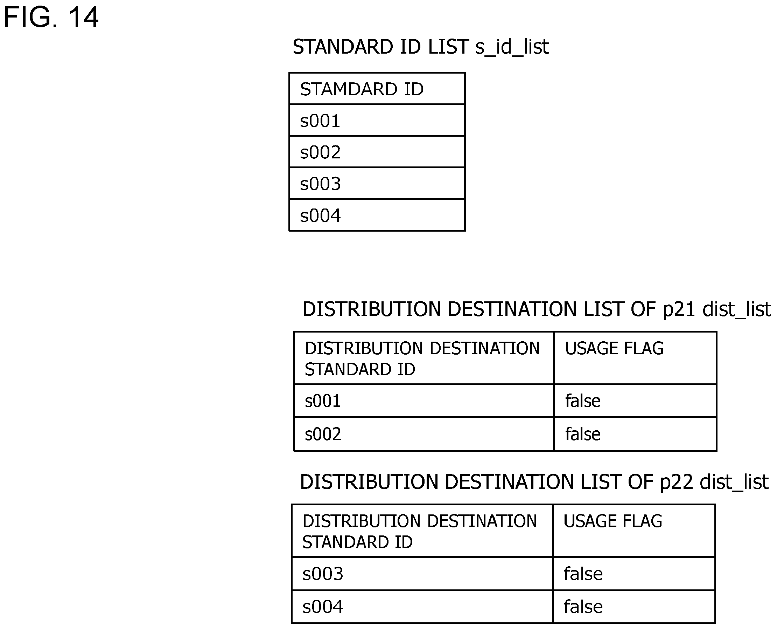

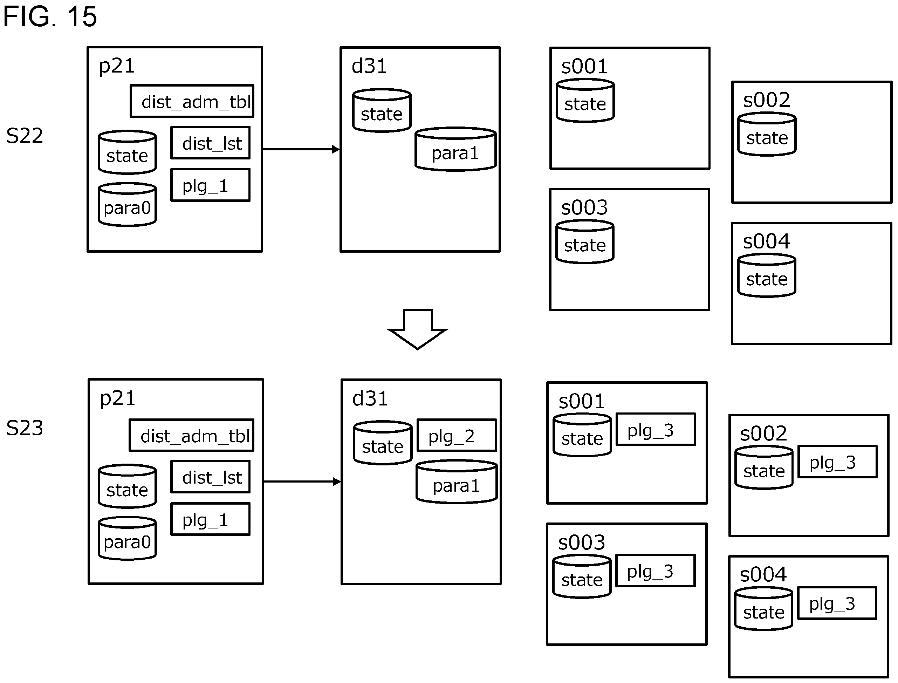

FIG. 11 is a diagram illustrating a flowchart of processing of the processing distribution setting program. FIGS. 12 and 13 are diagrams illustrating detailed flowcharts of steps S20 to S23 of FIG. 11. FIG. 14 is a diagram illustrating an example of a standard thread ID list and a distribution destination list. FIG. 15 is a diagram illustrating plug-ins and parameters set by the processing distribution setting program.

The processor executes the processing distribution setting program, and first, generates an ID list (standard ID list) of standard threads that are candidates for distribution destination (S20). As illustrated in the flowchart on the left side of FIG. 12, in the standard ID list generation step S20, the processor calculates a needed number of standard threads serving as distribution destination candidates for an event processing thread that is expected to be in a concentrated or heavy-load state (S201). Then, the processor generates the needed number of identifiers (IDs) of the standard threads by universally unique identifier (UUID) or the like (S202). In addition, the processor stores the generated identifiers (IDs) in the standard ID list. In the standard ID list s_id_list illustrated in FIG. 14, s001 to s004 are stored as standard IDs.

Subsequently, the processor generates a distribution destination list (S21). In this step, a distribution destination list set for each of the distribution control threads p21 and p22 is generated. As illustrated in the flowchart on the right side of FIG. 12, in the distribution destination list generation step S21, the processor acquires the needed number of identifiers (IDs) from the standard ID list as the processing distribution destination for any one of the distribution control threads p21 or p22 (S211) and lists the acquired standard IDs with the usage flag set to false (S212). Then, the processor stores the generated list in the distribution destination list of the distribution control threads p21 and p22 (S213). Steps S211 to S213 are executed for all distribution control threads p21 and p22. In the distribution destination list dist_list of each of the distribution control threads p21 and p22 illustrated in FIG. 14, s001, s002 and s003, s004 are stored in the distribution destination standard ID, respectively, and the usage flags are all set to false.

Subsequently, the processor executes the distribution control setting (S22). In this step, the distribution control plug-in is set in the distribution control threads p21 and p22. As illustrated in the flowchart on the left side of FIG. 13, in step S22, the processor acquires the distribution control plug-in plg_1 (S221), acquires the distribution destination list dist_list of the distribution control thread (S222), acquires the distribution control management table dist_adm_tbl (S223), and store the distribution control plug-in, the distribution destination list, and the distribution control management table dist_adm_tbl in the distribution control thread (S224). Steps S221 to S224 are performed on all distribution control threads.

As illustrated in FIG. 15, in step S22, the distribution control management table dist_adm_tbl, the distribution destination list dist_list, and the distribution control plug-in plg_1 are set in the distribution control thread p21. The distribution control management table is used to manage a copied standard thread when the distribution control thread generates the copies of the event processing threads d31 and d32 in the standard thread. This will be described in detail later.

Subsequently, the processor executes the copy control setting (S23). In this step, the copy request control processing plug-in is set in the event processing threads d31 and d32, and the copy control processing plug-in is set in the standard threads s001 to s004, respectively. In step S23, as illustrated in the flowchart on the right side of FIG. 13, the processor sets a copy request control processing plug-in plg_2, which operates in response to a copy request message, in the event processing threads d31 and d32 (S231). In addition, the processor sets a copy control processing plug-in plg_3, which operates in response to a copy message, in the standard threads s001 to s004 (S232).

As illustrated in FIG. 15, in step S23, the copy request control processing plug-in plg_2 is set in the event processing thread d31, and the copy control processing plug-in plg_3 is set in the standard threads s001 to s004.

### Distribution Control Processing and Copy Control Processing

As illustrated in FIG. 15, when the processing distribution setting program is executed, the lists and plug-ins needed for the distribution control threads p21 and p22, the event processing threads d31 and d32, and the standard threads s001 to s004 are set in the event stream processing system. Then, the event stream processing system receives event messages from IoT terminals such as real-world cars, and executes the event processing in a streaming manner.

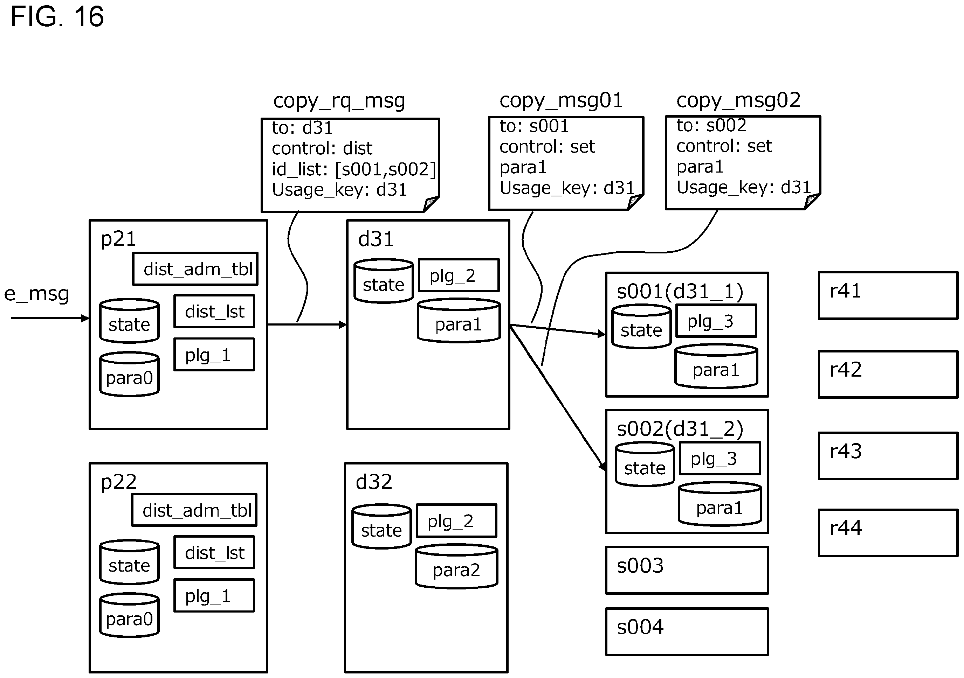

FIG. 16 is a diagram illustrating an example of distribution control processing and copy control processing. FIG. 17 is a diagram illustrating a distribution control management table and a distribution destination list in the distribution control thread p21 before and after the distribution control processing. As an example, an example will be described in which the distribution control thread p21 generates a copy of the event processing thread d31 in the standard threads s001 and s002 in order to distribute the concentration of event messages arriving at the event processing thread d31.

In FIG. 16, the distribution control thread p21 detects or predicts the concentration of event processing on the event processing thread d31 that processes event messages in the timeframe T1, and transmits a copy request message copy_rq_msg to the event processing thread d31. The copy request message copy_rq_msg includes, for instance, a destination object identifier "d31", the state value "dist" (distribution) of the state name "control", the distribution destination standard thread identifiers "s001, s002", and the key Usage_key "d31" indicating the distribution control source.

In the state before the distribution control processing in FIG. 17, in the distribution control management table dist_adm_tbl, the event processing threads d31 and d32 are registered in the field of "event processing ID (processing ID)" which is the distribution control target, the "load distribution presence" field is set to false, and the "in-use standard list" field is blank.

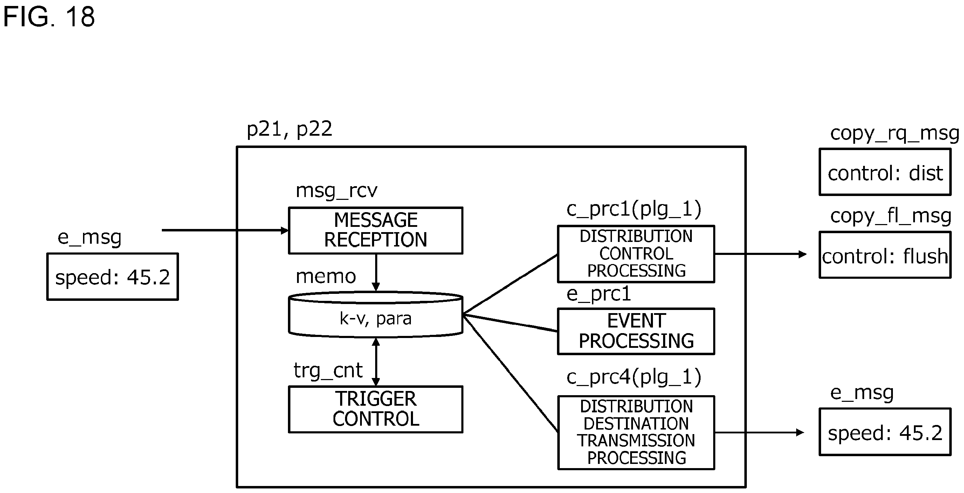

FIG. 18 is a diagram illustrating a configuration example of the distribution control thread. The configuration of the distribution control threads p21 and p22 has a message receiver msg_rcv, a memory memo, and a trigger control unit trg_cnt, as in the configuration example of the event processing thread illustrated in FIG. 3. The distribution control threads p21 and p22 are configured to be able to execute processing including the distribution control processing c_prc1, the event processing e_prc1, and the distribution destination transmission processing c_prc4. The distribution control processing c_prc1 is executed by the distribution control plug-in plg_1, and the event processing e_prc1 is executed by the event processing plug-in. The distribution destination transmission processing c_prc4 is processing included in the distribution control processing and is executed by the distribution control plug-in plg_1.

As illustrated in FIG. 18, when the distribution control threads p21 and p22 receive the event message e_msg, the message receiver records the state value or the like in the message in the memory memo, and the trigger control unit appropriately executes the distribution control processing c_prc1, the event processing e_prc1, and the distribution destination transmission processing c_prc4 in response to the change or newly-writing of the state value.

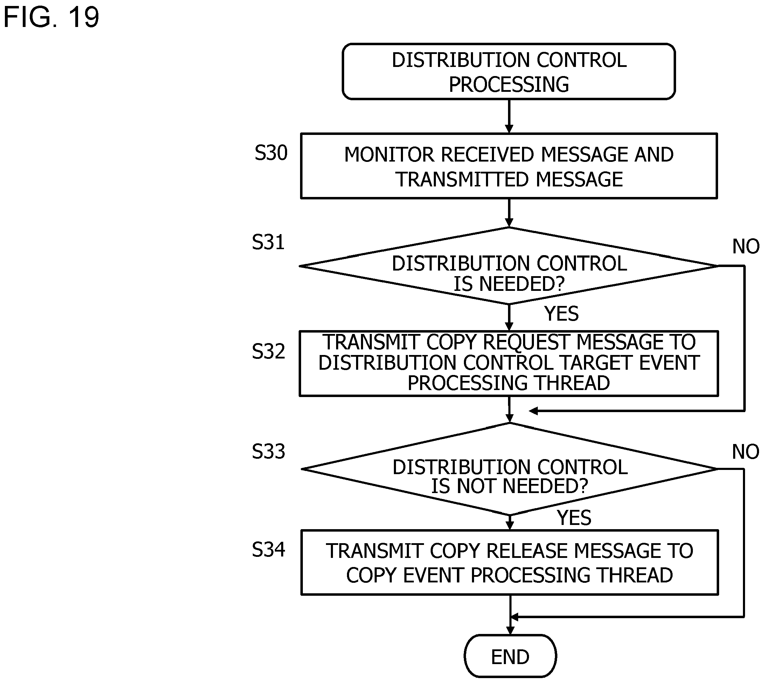

FIG. 19 is a diagram illustrating a flowchart of the distribution control processing c_prc1 by the distribution control thread. The distribution control threads p21 and p22 execute the following processing by executing the distribution control plug-in plg_1. That is, the distribution control thread monitors the received message and the transmitted message (S30), and determines that distribution control is needed when the concentration of event messages on the event processing threads d31 and d32 is detected or predicted (YES in S31). When it is determined that the distribution control is needed, the distribution control thread transmits a copy request message to the distribution control target event processing thread d31 (S32). On the other hand, when the concentration of event messages on the event processing thread d31 is resolved and it is determined that distribution control is not needed (YES in S33), the distribution control thread transmits a copy release message to the copied standard thread (S34).

When the event processing e_prc1 is executed and an event message e_msg is distributed and transmitted to the event processing thread d31 and the distribution destination copy event processing threads d31_1 and d31_2, the distribution control thread executes the distribution destination transmission processing c_prc4. The distribution control threads p21 and p22 control transmission so that event messages are distributed to the event processing thread and the copy event processing thread by the distribution destination transmission processing. A specific transmission control method will be described later.

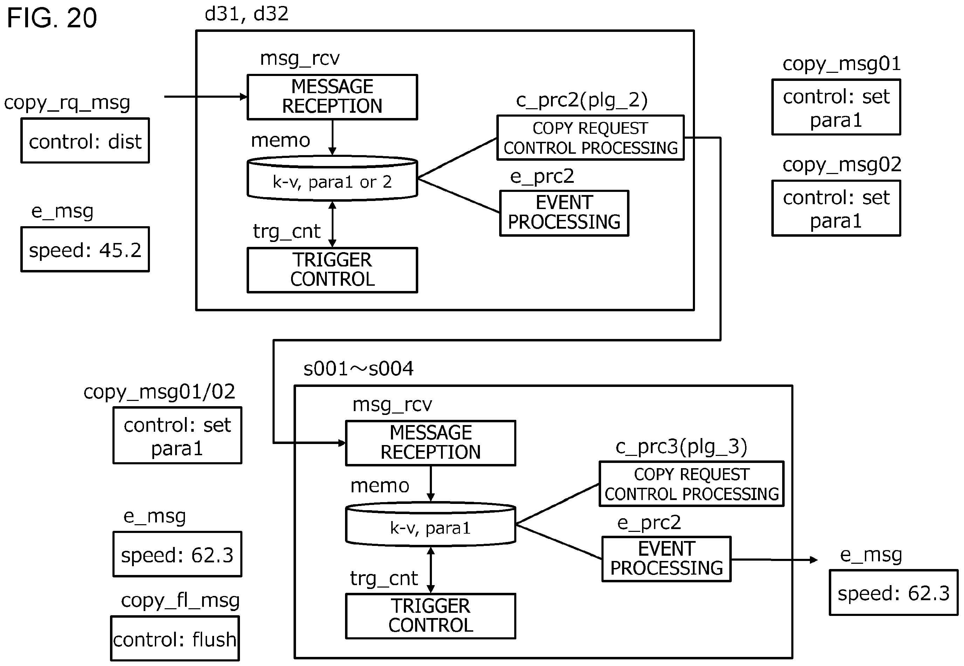

FIG. 20 is a diagram illustrating a configuration example of an event processing thread and a standard thread. The event processing threads d31 and d32 are configured so that the copy request control processing plug-in plg_2 that is executed using the state value "dist" of the state name "control" of the copy request message copy_rq_msg as a trigger is able to be executed. In addition, the event processing plug-in e_prc2 is also configured to be executable, and the parameters para1 and para2 needed for executing this plug-in are configured to be stored or referred to.

On the other hand, the standard threads s001 to s004 are configured so that the copy control processing plug-in plg_3, which is executed using the state value "set" of the state name "control" of the copy message copy_msg as a trigger, is able to be executed. In addition, the event processing plug-in e_prc2 is also configured to be executable.

As illustrated in FIGS. 16 and 20, the event processing thread d31 receives the copy request message copy_rq_msg and stores the state value "dist" of the state name "control" in the copy request message in the memory memo. Then, the event processing thread d31 executes the copy request control processing plug-in plg_2 according to the change of the state value as a trigger to generate the copy messages copy_msg01 and copy_msg02 corresponding to the state value "dist". Then, the copy messages are transmitted to the distribution destination standard threads s001 and s002 described in the copy request message. The copy messages copy_msg01 and copy_msg02 have the state value "set" of the state name "control" and include the parameter para1 needed for the event processing plug-in of the event processing thread d31.

In response to the reception of the copy messages copy_msg01 and copy_msg02, each of the standard threads s001 and s002 stores the state value "set" of the state name "control" in the copy message in the memory memo. Then, the standard threads s001 and s002 execute the copy control processing plug-in plg_3 according to the change of the state value as a trigger to store the parameter para1 included in the copy message in the memory memo in correlation with the identifier d31 of the distribution control thread of the usage key Usage_key.

Although not illustrated in FIG. 16, as illustrated in FIG. 20, the event processing plug-in e_prc2 of the event messages d31 and d32 is configured to be executable in advance in the standard threads s001 to s004. Then, in response to reception of the copy message, the distribution destination standard threads s001 and s002 store the parameter para1 of the copy source event processing thread d31. As a result, the standard threads s001 and s002 are converted to the copy event processing threads d31_1 and d31_2, and are able to execute the plug-in e_prc2 for the event message in the timeframe T1 in the same manner as the distribution control target event processing thread d31.

As illustrated after the distribution control of the distribution control management table dist_adm_tbl and the distribution destination list of the distribution control thread p21 in FIG. 17, when the copy request message is transmitted to the event processing thread d31, the distribution control thread p21 changes the load distribution presence of the event processing thread d31 to "true", and writes "s001, s002" to the in-use standard list in the distribution control management table dist_adm_tbl. The usage flag of the distribution destination standard IDs s001 and s002 in the distribution destination list dist_list is changed to "true".

In this way, the distribution control processing plg_1 by the distribution control thread p21, the copy request control processing plg_2 for the copy request message by the event processing thread d31, and the copy control processing plg_3 for the copy message by the standard threads s001 and s002 are completed. After that, as described with reference to FIG. 10, the distribution control thread p21 distributes and transmits the event message e_msg_2, which is the original relay processing, to the event processing thread d31 and its copy event processing threads d31_1 (s001) and d31_2 (s002). After executing the event processing plug-in e_prc1 illustrated in FIG. 18 to determine to which event processing thread d31 or d32, the event message e_msg has to be transmitted, the distribution destination transmission processing plug-in c_prc4 (plg_1) is executed to perform the event message transmission control. The distribution destination transmission processing plug-in c_prc4 (plg_1) refers to the distribution control management table dist_adm_tbl in FIG. 17, and distributes and transmits the event message to the event processing thread d31 and the copy event processing thread d31_1 (s001) and d31_2 (s002) in the in-use standard list if the destination event processing thread d31 is a distribution processing target (the load distribution is "true").

As illustrated in FIG. 16, the distribution control thread p21 includes d31 as the usage key Usage_key in the event message transmitted to the standard threads s001 and s002 being copied. According to the usage_key "d31", the standard threads s001 and s001 being copied execute the event processing plug-in by referring to the parameter para1 stored in correlation with the usage key "d31" when the copy message is received. In this way, the standard thread is able to properly execute the event processing plug-in using parameter para1 of the distribution target event processing thread d31.

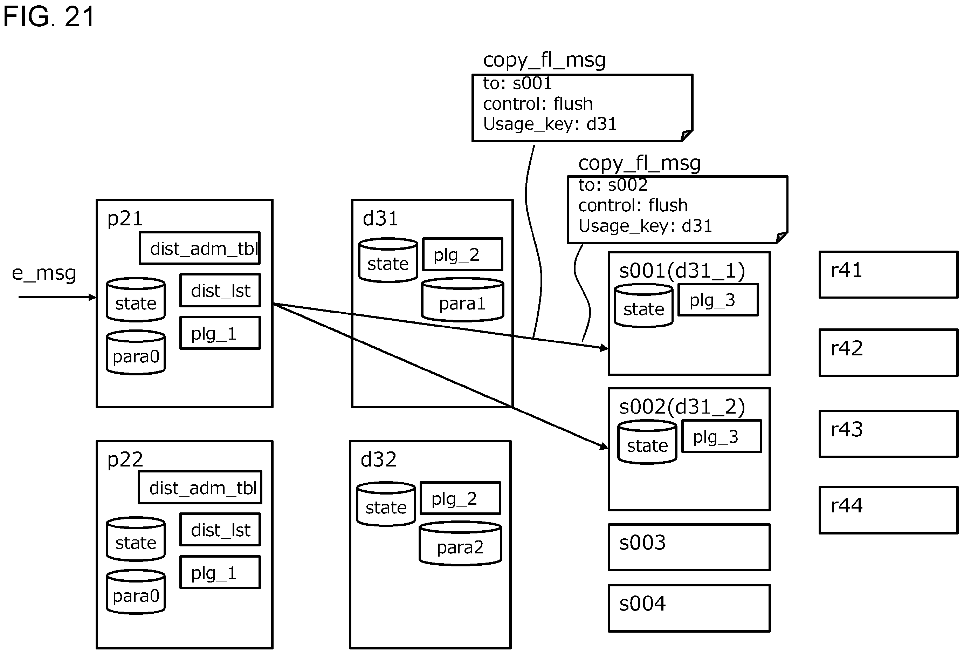

FIG. 21 is a diagram illustrating an example of copy release, which is one of the distribution control processing. The operation of copy release will be described with reference to FIGS. 18, 20, and 21. The distribution control thread p21 executes the distribution control plug-in plg_1 to determine or predict whether distribution control is not needed, generates a copy release message copy_fl_msg that releases the copy state by distribution control, and transmits the copy release message to the standard threads s001 and s002 in the in-use standard list of the distribution control management table. As described in FIG. 21, in the copy release message copy_fl_msg, the state value of the state name control is "flush" meaning copy release.

Upon receiving the copy release message, the standard threads s001 and s002 in the copy state write the state value "flush" to the object table in the memory, execute the copy control processing plg_3 according to the writing as a trigger, and deletes (flushes) the parameter para1 in the memory. As a result, the standard threads s001 and s002 are converted from the copy event processing thread to the standard thread, and then are able to be converted to the copy event processing thread in response to another copy message. The copy release message copy_fl_msg in FIG. 21 includes d31 as the usage key Usage_key, which means that the parameter para1 correlated with the usage key d31 is deleted in the memory memo. For instance, if the standard threads s001 and s001 are also used as a copy event processing thread of the event processing thread d32 by the distribution control thread p22, the parameters are also stored in correlation with the usage key d32, and one standard thread operates as a plurality of copy event processing threads. By deleting only the parameters correlated with d31, the parameters correlated with d32 remain, and the standard thread operates as the copy event processing thread of d32. When the standard thread operates as the copy event processing threads of the same event processing thread d31, a reference count or the like is provided in the parameter para1 correlated with d31 and the parameter is deleted only when the reference counter becomes 0.

Furthermore, upon receiving the copy release message, the standard threads s001 and s002 in the copy state transmit data, which is transmitted to the service event processing threads in the subsequent stage periodically (for instance, every minute), such as the average speed calculated by the event processing plug-in executed during copy, to the service event processing threads.

On the other hand, when the copy release message is transmitted, as illustrated in FIG. 17, the distribution control thread p21 changes the distribution control management table dist_adm_tbl and the distribution destination list dist_list to the state before the distribution control on the left side.

In FIG. 10, as described above, as an example, when there are one hundred distribution control threads p21, p22and one thousand event processing threads d31, d32, even if event messages are concentrated in some threads of the event processing threads, and a heavy load state occurs, a number of standard threads needed to alleviate the concentration and the heavy load are able to be converted into copy event processing threads of the event processing threads d31, d32 so that the concentrated and heavy load state are able to be alleviated. In addition, since a number of standard threads needed to alleviate the concentrated and heavy load state of some threads of the one thousand event processing threads may be deployed as the copy candidate threads, the number of standard threads is able to be suppressed and the resource efficiency is able to be increased.

### First Specific Example of Distribution Control Processing c_prc1

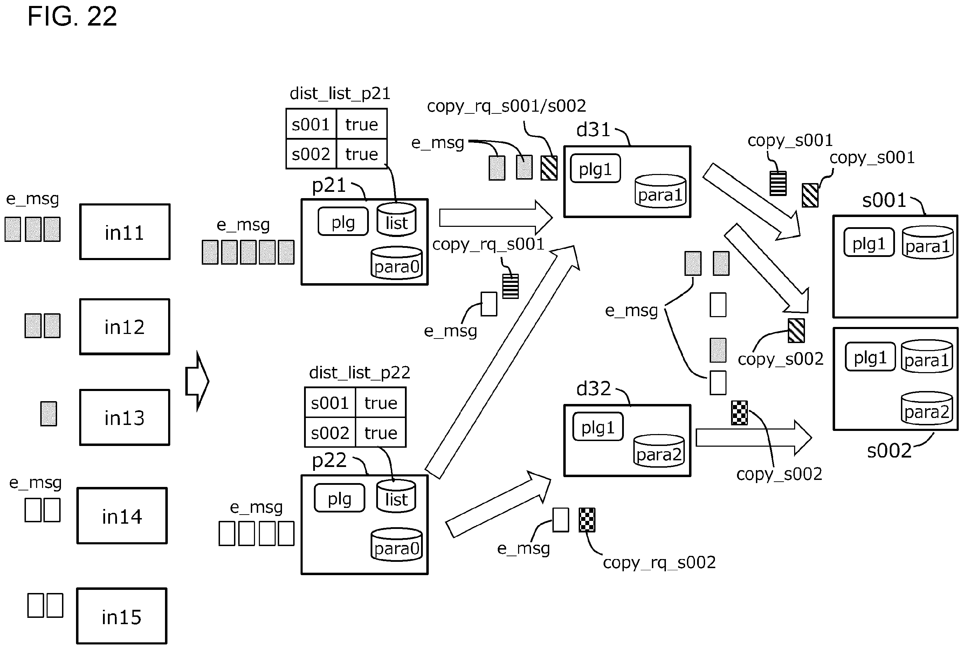

FIG. 22 is a diagram illustrating a first specific example of the distribution control processing. In the first specific example of FIG. 22, two standard threads s001 and s002 that are able to be converted into copies of the event processing threads d31 and d32 are provided. And the distribution control threads p21 and p22 share the two standard threads s001 and s002 and use them as copy threads. Furthermore, the distribution control threads p21 and p22 simultaneously use the standard threads s001 and s002 as copy threads of the event processing threads d31 and d32. Therefore, the distribution control threads p21 and p22 both hold the same distribution destination lists dist_list_p21 and dist_list_p22 in which the two standard threads s001 and s002 are registered. As a result, the distribution control threads p21 and p22 are able to efficiently use two standard threads s001 and s002.

In the first specific example of FIG. 22, the distribution control thread p21 transmits a copy request message copy_rq_s001/s002 to the event processing thread d31, and in response to this, the event processing thread d31 transmits the copy messages copy_s001 and copy_s002 to the standard threads s001 and s002, respectively. In response to this, the standard threads s001 and s002 store the parameter para1 of the event processing thread d31.

On the other hand, the distribution control thread p22 transmits a copy request message copy_rq_s001 to the event processing thread d31, and in response to this, the event processing thread d31 transmits a copy message copy_s001 to the standard thread s001. In this case, the standard thread s001 has already stored the parameter para1 of the event processing thread d31. At this point, the distribution control threads p21 and p22 share the standard thread s001 as a copy thread of the event processing thread d31.

Further, the distribution control thread p22 transmits a copy request message copy_rq_002 to the event processing thread d32, and in response to this, the event processing thread d32 transmits a copy message copy_s002 to the standard thread s002 to deliver the parameter para2. In response to this, standard thread s002 stores the parameter para2 held by event processing thread d32. At this time point, in the distribution destination list dist_list held by the distribution control threads p21 and p22, both standard threads s001 and s002 are set to "true". In addition, the standard thread s001 holds the parameter para1, and the standard thread s002 holds both parameters para1 and para2. The usage key in the message copy_rq_s001 from the distribution control thread p21 is d31, and the usage key in the message copy_s001 from the event processing thread d31 is also d31. The use key in the message copy_rq_s001 from the distribution control thread p22 is also d31, and the use key in the message copy_s001 from the event processing thread d31 is also d31. As a result, the para1 is stored in s001 in correlation with the usage key d31. At this time, a reference counter is provided for the usage key d31 to enable control that s001 is returned to the standard thread when the release request comes twice. On the other hand, in s002, para1 is stored in correlation with d31, and para2 is stored in correlation with d32.

When the above distribution control processing is performed, the distribution control thread p21 distributes and transmits the event message to the event processing thread d31 and the copied standard threads s001 and s002 for the event message of the event time in the timeframe T1. On the other hand, the distribution control thread p22 distributes and transmits the event message to the event processing thread d31 and the copied standard thread s001.

Then, the distribution control thread p21 transmits the event message to the event processing thread d32 for the event message in the timeframe T2. On the other hand, the distribution control thread p22 distributes and transmits the event message to the event processing thread d32 and the copied standard thread s002.

### Second Specific Example of Distribution Control Processing c_prc1

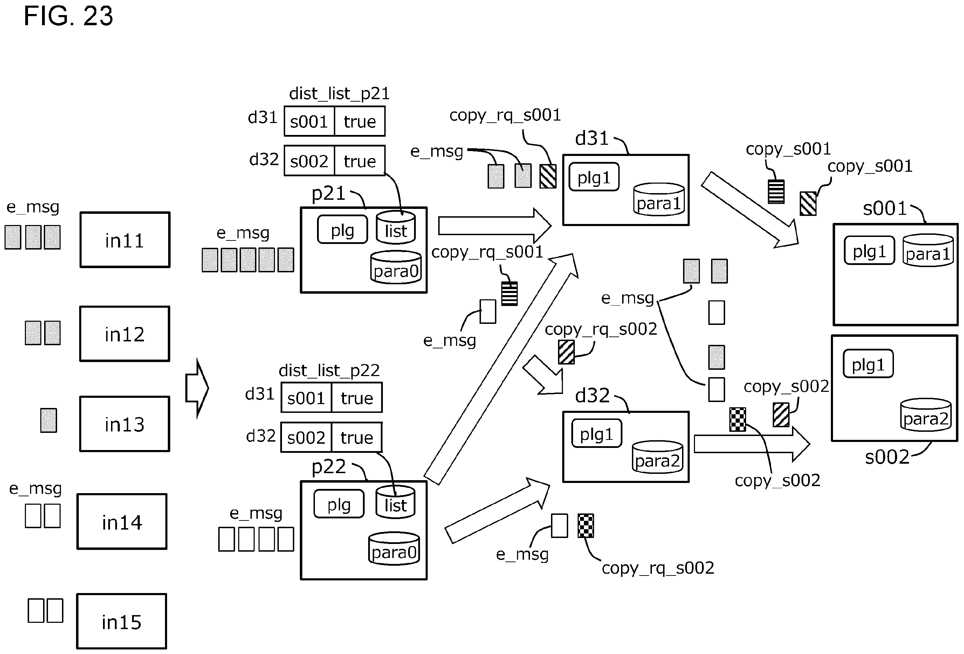

FIG. 23 is a diagram illustrating a second specific example of the distribution control processing. In the second specific example of FIG. 23, two standard threads s001 and s002 are provided. In addition, the distribution control threads p21 and p22 share two standard threads. However, the distribution control threads p21 and p22 hold the distribution destination lists dist_list_p21 and dist_list_p22 for the event processing threads d31 and d32, which are the copy sources, respectively. Further, the standard thread s001 is registered in the distribution destination list of the event processing thread d31, and the standard thread s002 is registered in the distribution destination list of the event processing thread d32. By setting such a distribution destination list, a certain standard thread will not be a copy thread of two event processing threads d31 and d32 and will not hold two parameters para1 and para2.

By doing so, a standard thread is shared by a plurality of distribution control threads p21 and p22, but a standard thread is shared only as a copy of the same event processing thread d31 or d32. As a result, the standard thread is avoided from holding two parameters para1 and para2, and resource efficiency is improved.

As illustrated in FIG. 23, the distribution control threads p21 and p22 generate the copy thread of the event processing thread d31 only in the standard thread s001 and generate the copy thread of the event processing thread d32 only in the standard thread s002. That is, both the distribution control threads p21 and p22 refer to the distribution destination list to transmit a copy request message copy_rq_s001 to the event processing thread d31 so that the standard thread s001 is used as a copy of d31. In a same manner, the distribution control threads p21 and p22 both refer to the distribution destination list to transmit a copy request message copy_rq_s002 to the event processing thread d32 so that the standard thread s002 is used as a copy of d32.

If the distribution control thread p21 generates a copy of the event processing thread d31 in the standard thread s001 and a copy of the event processing thread d32 in the standard thread s002, and the distribution control thread p22 generates a copy of the event processing thread d31 in the standard thread s002 and a copy of the event processing thread d32 in the standard thread s001, the standard threads s001 and s002 both hold two parameters para1 and para2. Although the processing distribution effect in this case is the same as that of the example of FIG. 23, only the number of parameters in the standard thread increases and the resource efficiency decreases.

### Third Specific Example of Distribution Control Processing c_prc1

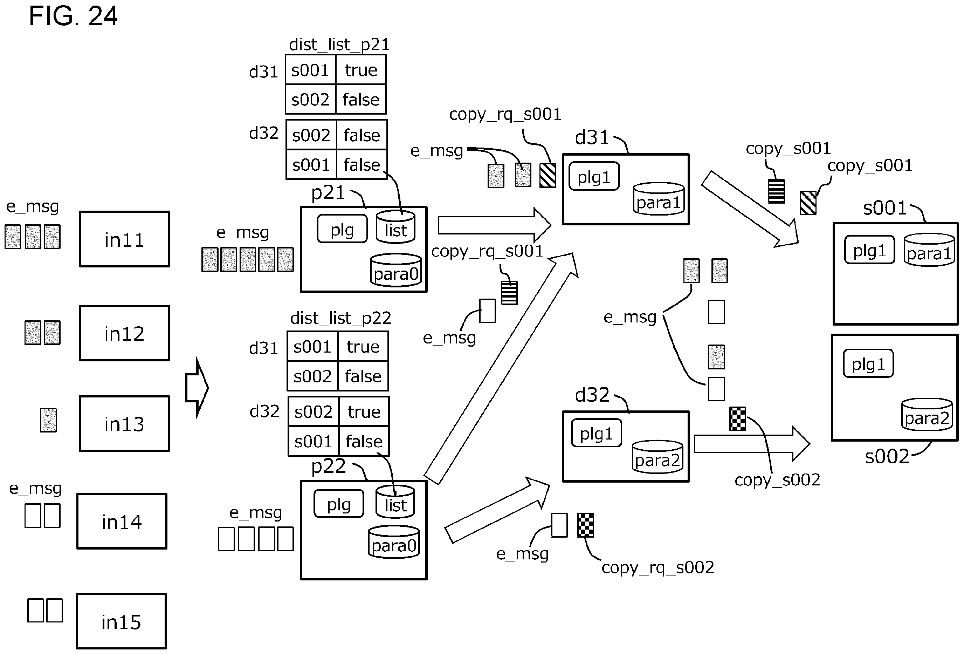

FIG. 24 is a diagram illustrating a third specific example of the distribution control processing. In the third specific example of FIG. 24, two standard threads s001 and s002 are provided. In addition, the distribution control threads p21 and p22 share two standard threads. However, the distribution control threads p21 and p22 hold the distribution destination lists dist_list_p21 and dist_list_p22 for the event processing threads d31 and d32, which are the copy sources, respectively. Up to this point, it is the same as the second specific example of FIG. 23.

Unlike the second specific example, in the third specific example of FIG. 24, in the distribution destination lists dist_list_p21 and dist_list_p22, the standard threads are registered in the distribution destination list for the event processing thread d31 in ascending order of IDs (s001, s002), and the standard threads s001, s002 are registered in the distribution destination list for the event processing thread d32 in descending order of IDs (s002, s001). Then, the distribution control thread selects the copy target standard thread based on the order of the standard threads registered in the distribution destination list.

That is, the copy thread of the event processing thread d31 is selected in ascending order of the IDs of the standard threads, and the copy thread of the event processing thread d32 is selected in the descending order of the IDs of the standard threads. By making the priority of selecting the standard thread as the copy destination different for respective event processing threads d31, d32 in this way, the probability that each of the standard threads holds only a single parameter is increased, and the amount of parameter resources held by each standard thread is decreased.

When there are more than two event processing threads, the number of standard threads is set to be equal to or greater than the number of event processing threads, and the IDs of the standard threads in the distribution destination list of each event processing thread are circulated so that the first IDs are different. For instance, when there are three event processing threads and nine standard threads, the distribution destination lists of the three event processing threads held by the three distribution control threads are set as follows.
event processing thread d31: s001 to s009
event processing thread d32: s004 to s009, s001 to s003
event processing thread d33: s007 to s009, s001 to s006

As a result, the probability that the standard threads s001 to s003 hold only the parameter of d31, the standard threads s004 to s006 hold only the parameter of d32, and the standard threads s007 to s009 hold only the parameter of d32 increases, and the possibility of holding a plurality of parameters is able to be decreased.

In FIG. 24, the distribution control threads p21 and p22 transmit a copy request message copy_rq_s001 to the event processing thread d31, and sets the standard thread s001 as a copy thread of the event processing thread d31. On the other hand, the distribution control thread p22 transmits a copy request message copy_rq_s002 to the event processing thread d32, and sets the standard thread s002 as a copy thread of the event processing thread d32. (However, the distribution control thread p21 may transmit a copy request message copy_rq_s002 to the event processing thread d32.) As a result, the standard thread s001 holds only the parameter para1 and the standard thread s002 holds only the parameter para2.

As described in the first to third specific examples of the distribution processing, if a plurality of distribution control threads shares the standard threads, the standard threads are able to be efficiently used as the copy thread. On the other hand, if the standard threads are used as a copy thread of a single event processing thread or as few event processing threads as possible, the types of parameters held by the copy thread are able to be single or reduced.

Next, apart from the distribution control process that improves the utilization efficiency of the standard thread described above, the distribution destination transmission process that improves the processing speed will be described.

First Specific Example of Distribution Destination Transmission Processing c_prc4

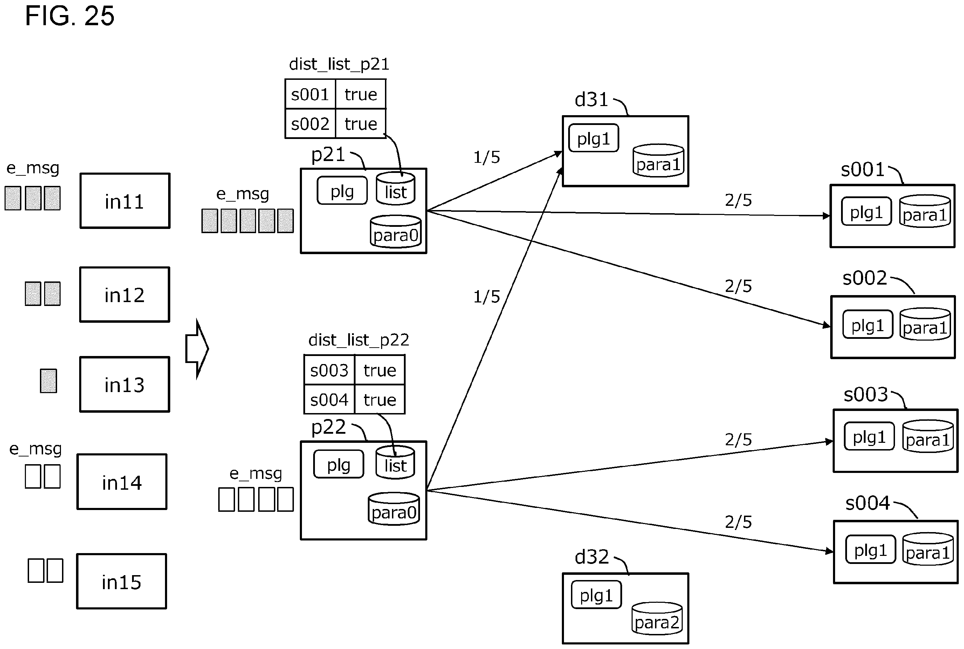

FIG. 25 is a diagram illustrating a first specific example of the distribution destination transmission processing. In the example of FIG. 25, four standard threads s001-s004 are provided. While the number of standard threads is increased, a plurality of distribution control threads p21, p22 are prevented from using the standard threads redundantly as the distribution destination. In the example of FIG. 25, the distribution destination lists dist_list_p21 and dist_list_p22 of the distribution control threads p21 and p22 have standard threads s001 and s002, and s003 and s004, respectively, and the redundancy of the standard threads used by the distribution control threads p21 and p22 as distribution destinations is avoided.

As a premise, the distribution control threads p21 and p22 are informed that the number of distribution control threads in the same stage is 2. However, since it is stream processing, a plurality of distribution control threads are not informed of information that another distribution control thread has performed distribution control to generate a copy thread.

In FIG. 25, the distribution control thread p21 converts the standard threads s001 and s002 into copy threads of the event processing thread d31, and the distribution control thread p22 converts the standard threads s003 and s004 into copy threads of the event processing thread d31. That is, the distribution control threads p21 and p22 have generated copy threads in all standard threads of the respective distribution destination lists.

The distribution control thread p21 sets the ratio of the transmission amount of event messages to the event processing thread d31 shared with another distribution control thread p22 to "1", and sets the ratio of the transmission amount of the standard threads s001 and s002 converted into the copy threads to "2" which is same as a number of distribution control threads. This is because there are two distribution control threads p21 and p22, it is considered that the same amount of event messages are transmitted from the distribution control thread p22 to the event processing thread d31, and the ratio of the event processing thread d31 to the standard thread s001 or s002 is 1:2. The distribution control thread p22 also transmits event messages at an identical transmission amount ratio to d31, s001, s002. According to this, the ratio of the amount of event messages transmitted from the distribution control thread p21 to the event processing thread d31 and the standard threads s001 and s002 is d31:s001:s002 = 1:2:2. In a same manner, the ratio for the distribution control thread p22 is set to d31:s003:s004 = 1:2:2. Each distribution destination transmission processing c_prc4 distributes the destinations of event messages so that the transmission amount of each destination has the set ratio. As a result, the ratio of the transmission amount is approximately set to d31:s001:s002:s003:s004 = 2:2:2:2:2.

As illustrated in FIG. 25, when the ratio of the transmission amount from p21 to d31, s001, and s002 is set to 1/5:2/5:2/5, and the ratio of the transmission amount from p22 to d31, s003, and s004 is set to 1/5:2/5:2/5, the message amount and load of the five event processing threads d31 and s001 to s004 become uniform.

In the above, the ratio of the message transmission amount is set on the assumption that all the standard threads that all distribution control threads p21 and p22 are able to use are converted into copy threads. It is assumed that event messages are not concentrated on the event processing thread d31 and so the distribution control thread p22 does not perform distribution control. In this case, the amount of messages from the distribution control thread s22 to the event processing thread d31 is low. Therefore, as a rough estimate, the ratio of the transmission amount from p21 to d31, s001, and s002 is 1/5:2/5:2/5, and the ratio of the transmission amount from p22 to d31 is 1/5, and the amount of communication addressed to d31, s001, and s002, becomes almost uniform at 2:2:2.

Second Specific Example of Distribution Destination Transmission Processing c_prc4

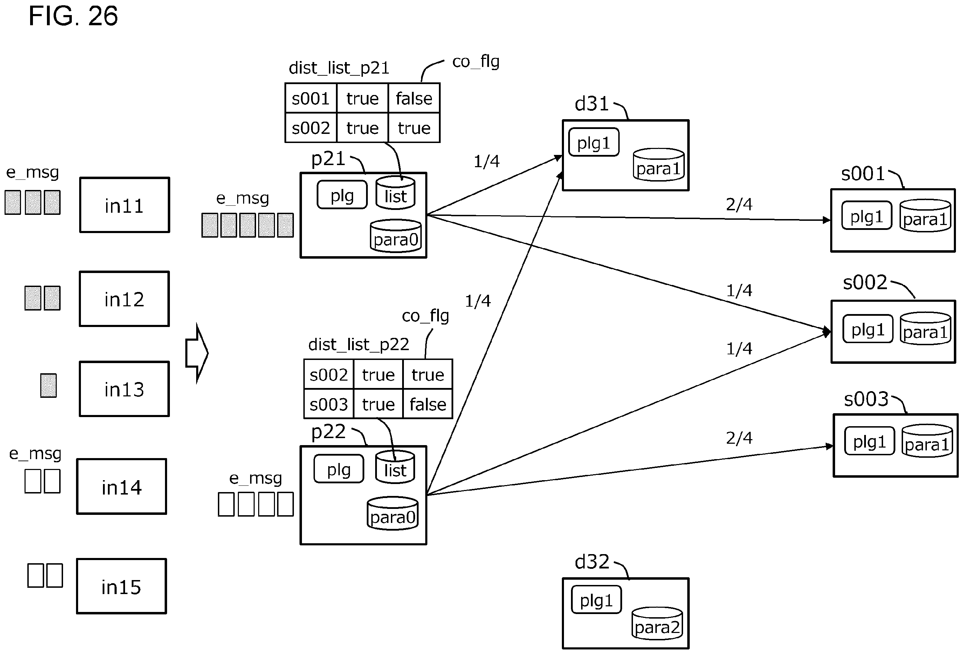

FIG. 26 is a diagram illustrating a second specific example of the distribution destination transmission processing. In the example of FIG. 26, three standard threads s001 - s003 are provided. The distribution control threads p21 and p22 share the standard thread s002 as a copy thread, and exclusively use the standard threads s001 and s003, respectively. In this case, the distribution destination lists dist_list_p21 and dist_list_p22 of the distribution control threads p21 and p22 have standard threads s001 and s002, and s002 and s003, respectively. A share flag co_flg is provided in the distribution destination list, and the standard thread s002 sets the share flag co_flg to "true" in both dist_list_p21 and dist_list_p22.

In FIG. 26, the distribution control threads p21 and p22 convert all the standard threads s001 and s002, and s002 and s003 registered in the respective distribution destination lists into copy threads, respectively. Therefore, all standard threads s001 to s003 hold the parameter para1 of the event processing thread d31.

In this case, the ratio of the amount of event messages transmitted from the distribution control thread p21 to the event processing threads d31 and the standard threads s001 and s002 is set to d31:s001:s002 = 1:2:1 with the same logic as in the first specific example. Since d31 and s002 are shared, the ratio is 1, and only the exclusive standard thread s001 has a ratio of 2 which is the number of distribution control threads d31, d32. In a same manner, the ratio for the distribution control thread p22 is set to d31:s002:s003 = 1:1:2. As illustrated in FIG. 26, when the ratio of the transmission amount from p21 to d31, s001, and s002 is set to 1/4:2/4:1/4, and the ratio of the transmission amount from p22 to d31, s002, s003 is set to 1/4:1/4:2/4, the message amount and the load of the four event processing threads d31 and s001 to s003 become uniform.

It is assumed that the distribution control thread p22 does not perform distribution control. In this case, the amount of messages transmitted from the distribution control thread p22 to the event processing thread d31 is low. Therefore, as a rough estimate, the ratio of the transmission amount from p21 to d31, s001, and s002 is approximately 1/4:2/4:1/4, and the ratio of the transmission amount from p22 to d31 is 1/4, and the amount of communication addressed to d31, s001, and s002 becomes almost uniform at 2:2:1.

In the second specific example, the standard threads are partially shared and partially unshared to avoid concentration of messages. Therefore, the purpose of avoiding the concentration of messages in the event processing thread d31 is achieved while improving the utilization efficiency of standard threads.

As described above, according to the present embodiment, in the event stream processing system, a standard thread is provided in advance in the subsequent stage of an event processing thread in which messages are likely to be concentrated. Then, a copy of some of the event processing threads on which messages are temporarily concentrated is generated in the standard thread, and the copy is released when the message concentration is alleviated. As a result, it is possible to suppress the concentration of messages in the event processing thread while efficiently deploying the resources of the standard thread.

According to the first aspect of the present embodiment, it is possible to provide an event stream processing method and an event stream processing program that alleviate, with a low amount of resources, the concentration and heavy load of event processing.

## Claims

1. A method of event stream processing for an event stream processing system, the method comprising:
wherein the event stream processing system including processing threads provided in each of a plurality of stages, the processing threads including a distribution control thread provided in a first stage, a first event processing thread and a second event processing thread provided in a second stage to execute, in response to a processing message, processing corresponding to the processing message, and a standard thread that is able to be a copy of either the first event processing thread or the second event processing thread,
transmitting, by the distribution control thread, the processing message to either the first event processing thread or the second event processing thread,
transmitting, by the distribution control thread, when an event processing thread of either the first event processing thread or the second event processing thread is in a heavy load state, a copy request message that requests converting the standard thread to the copy to a heavy-load event processing thread and registers the standard thread in a distribution destination list,
transmitting, by the heavy-load event processing thread, parameters for operating as a copy of the heavy-load event processing thread to the standard thread in response to reception of the copy request message, and
executing, by a copy standard thread that has received the parameters and being converted to the copy, processing corresponding to the processing message received from the distribution control thread by using the received parameters.

2. The method of event stream processing according to claim 1,
the method further comprising:
distributing, by the distribution control thread, the processing message to be transmitted to the heavy-load event processing thread and the copy standard thread based on the distribution destination list.

3. The method of event stream processing according to claim 1,
the method further comprising:
transmitting, by the distribution control thread, a copy release message to the copy standard thread to convert the copy standard thread into a standard thread that is not the copy when the heavy-load event processing thread is no longer in a heavy load state.

4. The method of event stream processing according to claim 1, wherein
the event stream processing system has a plurality of the standard threads,
the method further comprising:
including, by the distribution control thread, identification information of a standard thread that is converted to the copy among the plurality of standard threads in the copy request message and transmitting the copy request message to the heavy-load event processing thread, and
transmitting, by the heavy-load event processing thread, the parameters to the standard thread that is converted to the copy.

5. The method of event stream processing according to claim 4, wherein
the first event processing thread and the second event processing thread hold a first parameter and a second parameter, respectively,
the method further comprising:
transmitting, by the heavy-load event processing thread, in response to reception of the copy request message, the parameters, held by the heavy-load event processing thread, to the standard thread that is converted to the copy.

6. The method of event stream processing according to claim 4, wherein the event stream processing system has a plurality of the distribution control threads,
the method further comprising:
holding, by each of the plurality of distribution control threads, in the respective distribution destination list, identification information of copy candidate standard threads and usage information relating to whether the standard thread is converted to the copy,
holding, by the first distribution control thread and the second distribution control thread among the plurality of distribution control threads, the identification information of common copy candidate standard thread in the respective distribution destination lists, and
sharing, by the first distribution control thread and the second distribution control thread, the common copy candidate standard thread as a copy of the heavy-load event processing thread.

7. The method of event stream processing according to claim 4,
the method further comprising:
transmitting, by the distribution control thread, when the first event processing thread is in the heavy load state, a copy request message, which requests converting the first standard thread among the plurality of standard threads to a copy standard thread, to the first event processing thread,
distributing, by the distribution control thread, the processing message to be transmitted to the first event processing thread and the first standard thread,
transmitting, by the distribution control thread, when the second event processing thread is in the heavy load state, the copy request message, which request converting the second standard thread among the plurality of standard threads to a copy standard thread, to the second event processing thread, and
distributing, by the distribution control thread, the processing message to be transmitted to the second event processing thread and the second standard thread.

8. The method of event stream processing according to claim 4, wherein
the event stream processing system has a plurality of the distribution control threads,
the method further comprising:
holding, by each of the plurality of distribution control threads, identification information of copy candidate standard threads and usage information relating to whether the standard thread is converted to the copy in the respective distribution destination list,
holding, by each of the plurality of distribution control threads, identification information of different copy candidate standard threads respectively in the respective distribution list,
transmitting, by the first distribution control thread among the plurality of distribution control threads, the copy request message, which requests converting the copy candidate standard thread in the distribution destination list to the copy standard thread, to the heavy-load event processing thread and transmitting the processing message at a transmission amount ratio of 1 for the heavy-load event processing thread relative to N for the copy standard thread, with the N being a number of the plurality of distribution control threads.

9. An event stream processing program causing a computer to execute an event stream processing comprising:
wherein the event stream processing system including processing threads provided in each of a plurality of stages, the processing threads including a distribution control thread provided in a first stage, a first event processing thread and a second event processing thread provided in a second stage to execute, in response to a processing message, processing corresponding to the processing message, and a standard thread that is able to be a copy of either the first event processing thread or the second event processing thread,
transmitting, by the distribution control thread, the processing message to either the first event processing thread or the second event processing thread,
transmitting, by the distribution control thread, when an event processing thread of either the first event processing thread or the second event processing thread is in a heavy load state, a copy request message that requests converting the standard thread to the copy to a heavy-load event processing thread and registers the standard thread in a distribution destination list,
transmitting, by the heavy-load event processing thread, parameters for operating as a copy of the heavy-load event processing thread to the standard thread in response to reception of the copy request message, and
executing, by a copy standard thread that has received the parameters and being converted to the copy, processing corresponding to the processing message received from the distribution control thread by using the received parameters.
